(19) Europäisches Patentamt
European Patent Office
Office européen des brevets

(11) **EP 2 284 793 A1**

(12) **EUROPEAN PATENT APPLICATION**

(43) Date of publication:
**16.02.2011 Bulletin 2011/07**

(51) Int Cl.:
*G06T 3/40* (2006.01)  *H04N 7/26* (2006.01)

(21) Application number: **10167779.7**

(22) Date of filing: **16.11.1998**

(84) Designated Contracting States:
**DE DK FI FR GB NL SE**

(30) Priority: **14.11.1997 US 970880**
**14.11.1997 US 970338**

(62) Document number(s) of the earlier application(s) in accordance with Art. 76 EPC:
**98309349.3 / 0 917 105**

(71) Applicant: **Sony Electronics Inc.**
**Park Ridge, NJ 07656 (US)**

(72) Inventors:
• **Chang, Ching-Fang**
**San Jose, CA 95129 (US)**

• **Yanagihara, Naofumi**
**San Diego, CA 92127-1898 (US)**

(74) Representative: **McGowan, Cathrine**
**D Young & Co LLP**
**120 Holborn**
**London EC1N 2DY (GB)**

Remarks:
This application was filed on 29-06-2010 as a divisional application to the application mentioned under INID code 62.

(54) **Real time decoding of reduced digital video**

(57)    A system (110,115,120,125,130,135,140,145) and method to decode encoded video images in such a manner as to maintain high quality images while reducing the computation time needed to decode the images. The system takes into account that the resultant display generated may only have a fraction (1/4,1/16) of the resolution of the original image. Thus, optimizations are realized by modifying (205,210,215) the inverse discrete cosine transform (IDCT) and inverse weighting (IW) processes to process only the portion of the image to be displayed.

FIG. 1a

FIG. 1b

**Description**

The present invention relates to the decoding of digital video images.

Video images in digital format, referred to frequently as digital video (DV) is achieving greater usage as the use of computers for developing video images increases. The digital video data is stored or transmitted in a compressed encoded format, often referred to as "DV" format. The encoding process typically includes a discrete cosine transform (DCT) to translate the pixel data into DCT coefficients and a weighting function to weight the values (See e.g., "Specifications of Consumer-Used Digital VCRs Using 6.3 mm Magnetic Tape", HD Digital VCR Conference, (December 1994)). After the data is decoded, the image is sized for the viewing window, for example, by using a pixel decimation process wherein specified spatially spaced pixels are removed to reduce the number of pixels representative of the image. Thus, a number of pixels decoded are not subsequently displayed.

The decoding process is time consuming due to the number of operations required to decode the data. Thus it is desirable to minimize the time required to perform the decoding process while maintaining a high quality image.

The system and method of the present invention decodes encoded video images in such a manner as to maintain high quality images while reducing the computation time needed to decode the images. The system takes into account that the resultant display generated may only have a fraction of the resolution of the original image. Thus, optimizations are realized by modifying and combining the inverse discrete cosine transform (IDCT) and inverse weighting (IW) processes to process only the portion of the image to be displayed.

In one embodiment of a decoding of a 1/4 size image, a horizontal 4-point IW/IDCT process is applied to the lower four coefficients in each of the first four rows in an 8 x 8 matrix of transformed coefficients, referred to herein as a block, which is part of a frame of video. A vertical 8-point IW/IDCT process is applied to all eight coefficients in each of the first four columns with the higher four coefficients in each column set to a value of zero. In an alternate embodiment, when the input block consists of two 4x8 matrices of sum and difference coefficients, a horizontal 4-point IW/IDCT is applied to the coefficients. A vertical 4-point IW/IDCT is applied to the sums of corresponding sum and difference coefficients.

Furthermore, in one embodiment of a decoding of a 1/16 size image, a horizontal 2- point IW/IDCT process is applied to the lower two coefficients in each of the first two rows of an 8 x 8 matrix of transformed coefficients, referred to herein as a block, which is part of a frame of video. A vertical 2-point IW/IDCT process is applied to the lower two coefficients in each of the first two columns. The result is a $2\times2$ matrix of pixel data. In an alternate embodiment, when the input block consists of two 4x8 matrices of sum and difference coefficients, a horizontal 2-point IW/IDCT is applied to the lower two coefficients. A vertical 2-point IW/IDCT is applied to the lower two sum coefficients.

The invention will be further described by way of example with reference to the accompanying drawings, in which:

Figure 1a is a simplified block diagram of one embodiment of a decoder which operates in accordance with the teachings of the present invention, and **Figure 1b** is a simplified block diagram of a general purpose computer that operates in accordance with the teachings of the present invention.

Figure 2 is a flow diagram illustrating one embodiment of the method of the present invention to perform a combined inverse cosine transform and inverse weighting function on an $8 \times 8$ block of coefficients.

Figure 3 is a diagram illustrating the coefficients processed in accordance with the flow diagram of **Figure 2.**

**Figure 4a** and **Figure 4b** are a butterfly diagrams illustrating one embodiment of the combined one-dimensional 4-point inverse cosine transform and inverse weighting function utilized in accordance with the flow diagram of **Figure 2.**

Figure 5 is a flow diagram illustrating an alternate embodiment of the method the present invention that performs a combined inverse cosine transform and inverse weighting function on two 4 x 8 matrices of sum and difference coefficients.

Figure 6 is a diagram illustrating the coefficients processed in accordance with the flow diagram of **Figure 5.**

Figure 7 is a butterfly diagram illustrating one embodiment of a vertical inverse discrete cosine transform and inverse weighting function utilized in accordance with the flow diagram of **Figure 5.**

Figure 8 illustrate alternate representations of butterfly diagrams.

**Figure 9a** and **Figure 9b** illustrate mathematical implementations of the flow diagram of **Figure 2** and **Figure 5,** respectively.

Figure 10 is a flow diagram illustrating one embodiment of the method of the present invention to perform a combined inverse cosine transform and inverse weighting function on an 8 x 8 block of coefficients.

Figure 11 is a diagram illustrating the coefficients processed in accordance with the flow diagram of **Figure 10.**

Figure 12 is a butterfly diagram illustrating one embodiment of the combined one-dimensional 2-point inverse cosine transforms and inverse weighting function utilized in accordance with the flow diagram of **Figure 10.**

Figure 13 is a flow diagram illustrating an alternate embodiment of of the method the present invention that performs a combined inverse cosine transform and inverse weighting function on two 4 x 8 matrices of sum and difference coefficients.

**Figure 14** is a diagram illustrating the coefficients processed in accordance with the flow diagram of **Figure 13.**
**Figure 15** is a butterfly diagram illustrating one embodiment of a vertical inverse discrete cosine transform and inverse weighting function utilized in accordance with the flow diagram of **Figure 13.**
**Figure 16a** and **Figure 16b** illustrate two dimensional implementations of the flow diagrams of **Figure 10** and **Figure 13,** respectively.

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention unnecessarily.

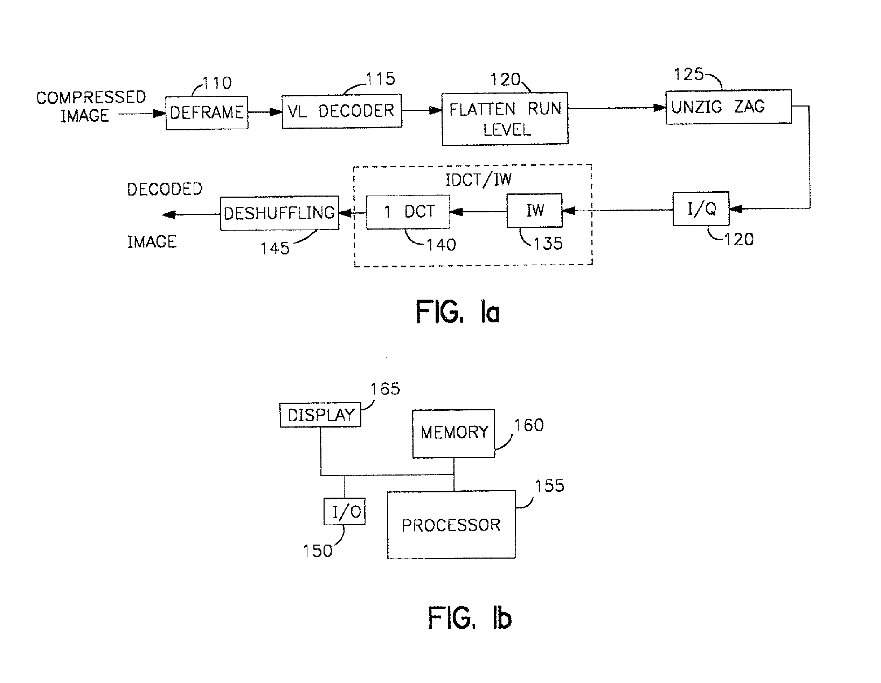

**Figure 1a** illustrates, in simplified block diagram form, one implementation of the decoding circuitry of the present invention. It is readily apparent that the present invention can be implemented in a dedicated microcontroller circuit in logic circuitry or software operable on a general purpose computer. The applications of such decoders are varied. For example, the decoder may be implemented in a computer system that receives digital video signals from an external source such as satellite, broadcasts or digital video players. Alternately, the decoder circuitry may be embodied in digital video player recorders, cameras or other digital video equipment.

Referring to **Figure 1a,** the compressed image is input to a deframing subcircuit 110, which unpacks every five fixed-length synchronization blocks into thirty blocks of variable-length coded quantized coefficients. A block is a portion of a frame of video image. In the present embodiment, each encoded block is a matrix of 8x8 discrete cosine transform (DCT) coefficients. In an alternate embodiment, each block consists of two matrices of 4x8 DCT coefficients, one matrix containing sum coefficients and one matrix containing difference coefficients. VL decoder 115 performs a variable length decoding process in accordance with teachings known in the art to generate run-level pairs of DCT coefficients. The flatten run-level circuit 120 expands the run-level pairs into individual DCT coefficients. For example, if a run-level pair sequence consists of (2,2), (4,1), the flattened representation consists of (0,0,2), (0,0,0,0,1). The unzig-zag subcircuit 125 receives the one-dimensional representation of the quantized coefficients and turns it into a two-dimensional representation. The I/Q subcircuit performs an inverse quantization process on the DCT coefficients. The inverse weighting (IW) function 135 inversely weights the coefficients that originally were weighted during the encoding process. One example of the weighting performed is described in "Specifications of Consumer-Used Digital VCRs Using 6.3 mm Magnetic Tape", HD Digital VCR Conference, (December 1994), page 28.

An inverse discrete cosine transform (IDCT) 140 is then applied to transform the DCT coefficients into pixel values. Once the pixel values are generated, a deshuffling process 145 is applied to generate the completed image. The subcircuits 110, 115, 120, 125, 130 and 145 may be embodied a variety of ways known to one skilled in the art and will not be discussed further herein. For further information see, for example, "Specifications of Consumer-Used Digital VCRs Using 6.3 mm Magnetic Tape", HD Digital VCR Conference, (December 1994).

As will be explained below, an innovative combination of inverse weighting (IW) and inverse discrete cosine transform implementation has been developed to provide high quality reduced-sized images with minimal processing overhead. As noted earlier, the present invention also may be implemented on a general purpose computer as illustrated in **Figure 1b.**

In this embodiment, the compressed image is received through input port circuitry 150 which forwards the data to the processor 155 which executes instructions from memory 160 to perform the steps described, and in some embodiments, display the decoded image on display 165.

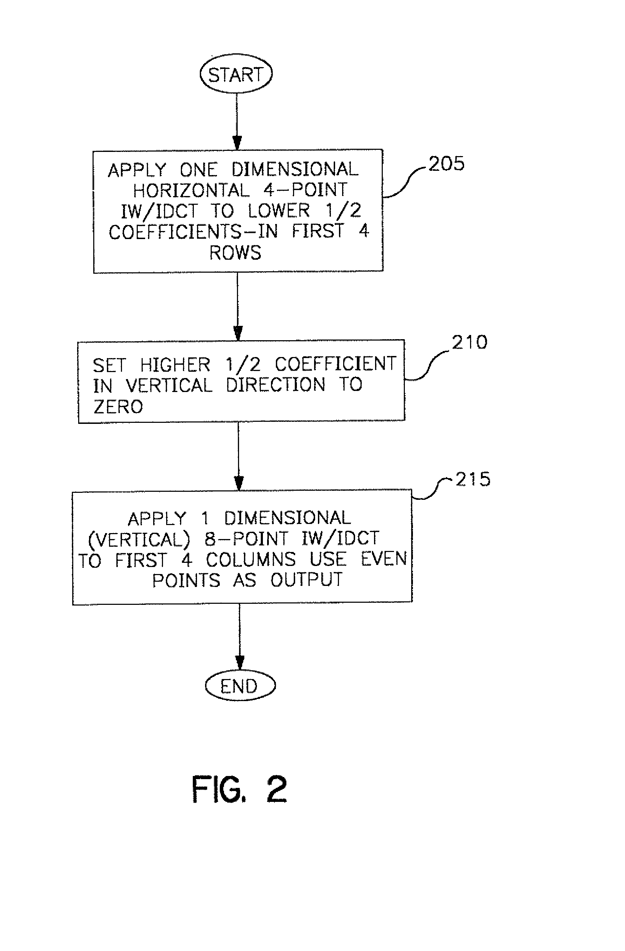

**Figure 2** is a simplified flow diagram of one embodiment of the innovative process for decoding a 1/4 size image in accordance with the teachings of the present invention. The embodiments described herein combine the application of the inverse weighting (IW) and inverse discrete cosine transforms (IDCT) into one function. The advantage to this is that the number of multiplications or computations required is reduced. However, it should be realized that the IW and IDCT of the processes described herein can be applied in a serial manner.

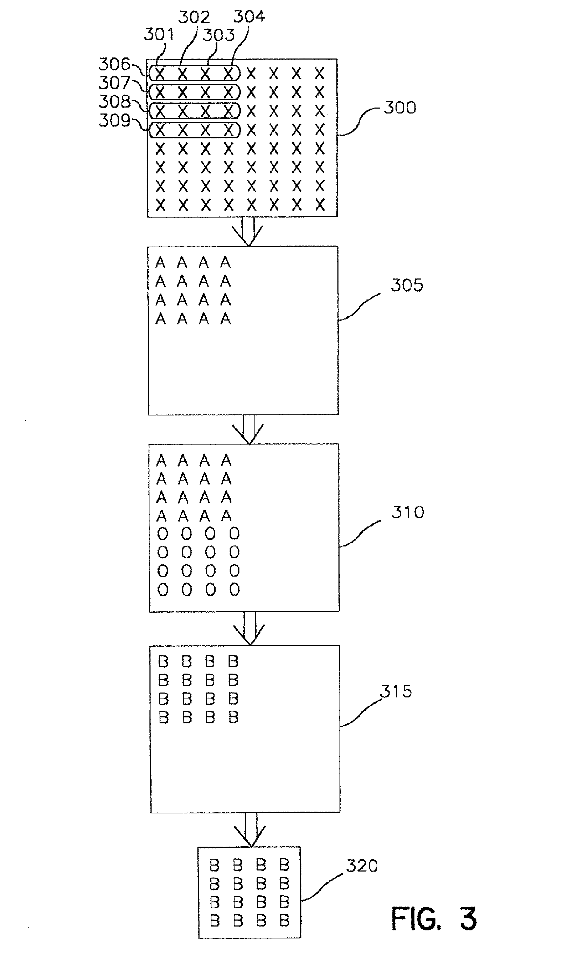

Referring to **Figure 2,** at step 205, a one-dimensional (1D) horizontal 4-point IW/IDCT function is applied four times to the lower half, in this embodiment, four, coefficients in the matrix. This is graphically illustrated with respect to **Figure 3.**

Matrix 300 is representative of an 8 x 8 block of DCT coefficients representative of a portion of an image where x represents an encoded coefficient. The index of the matrix 300 increases from left to right and from top to bottom. The coefficients with smaller indices are referred as lower coefficients. The coefficients with larger indices are referred as higher coefficients. Block 305 is representative of the block after application of the 4-point IW/IDCT as set forth at step 205. Referring to block 305, the "A" coefficient is representative of the DCT coefficients after application of the 4-point 1D horizontal IW/IDCT. It should be noted that the present embodiment describes the process with respect to an 8x8 block; however it is contemplated that the process may be applied to nxm blocks, where n is greater than or equal to 4 and m is greater than or equal to 4.

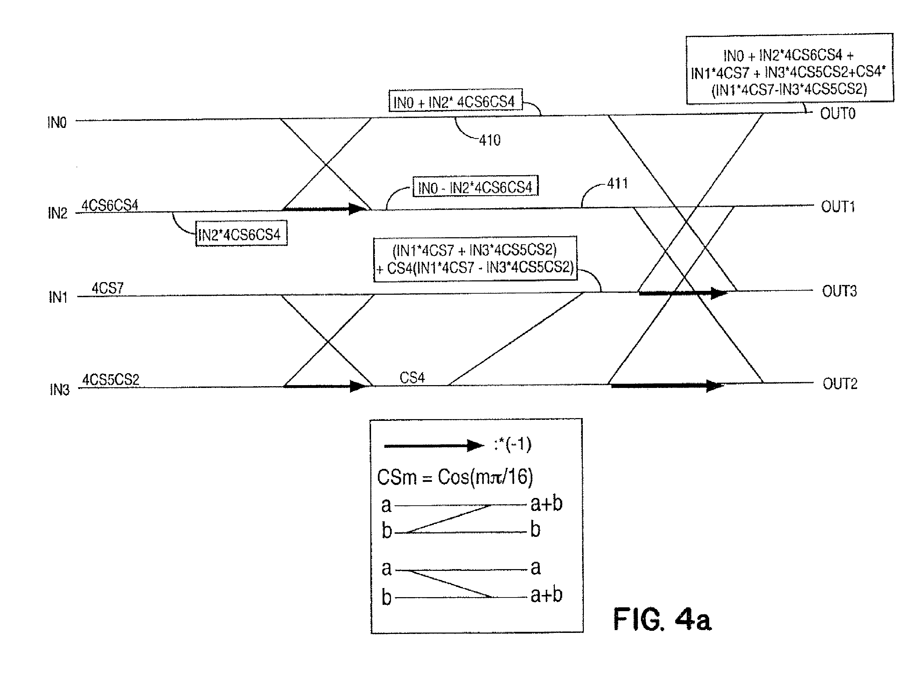

**Figure 4a** is representative of one example of a 4-point IW/IDCT applied at step 205 of **Figure 2.** IN0, IN1, IN2 and IN3 correspond to locations 301, 302, 303, 304 in each row 306, 307, 308, 309. This particular embodiment of the 4-point IW/IDCT is specified to decode a digital video image encoded in accordance with the specification set forth in "Specifications of Consumer-Used Digital VCRs Using 6.3 mm Magnetic Tape", HD Digital VCR Conference, (December 1994). It should be readily apparent that the 4-point IW/IDCT applied may vary according to the particular encoding process utilized.

The IW/IDCT depicted in **Figure 4a** is represented in a form known as a butterfly where $CSi = \dfrac{\cos i\pi}{16}$ , a diagonal line is representative of an addition operation, an arrow is representative of a multiplication operation by a -1, and values along the line represent a multiplication operation by the noted values. For example, with respect to **Figure 4a,** at stage 410, the modifications performed on the input IN0 correspond to IN0 + 4CS6CS4 * IN2. At a corresponding point stage 411, the modifications performed on IN2 equals IN0 -IN2*4CS6CS4. Following through with respect to output 0 (OUT0), output 0 equals IN0+IN2*4CS6CS4+ INI*4CS7 +IN3*4CS5CS2+CS4*(IN1*4CS7-IN3*4CS5CS2).

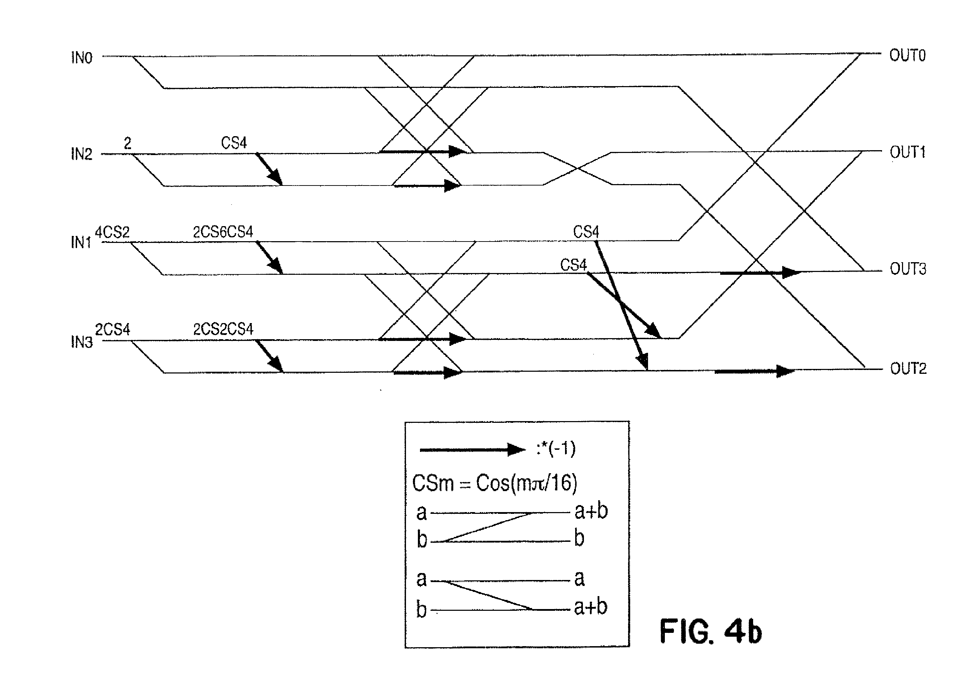

Referring back to **Figure 2,** at step 210, the higher half, e.g., 4, coefficients in the vertical direction are set to zero. This is graphically represented by block 310 of **Figure 3.** It should be noted that it is preferred that the remaining unprocessed coefficients are essentially ignored (as shown by omission in blocks 305, 310, 315) to save additional processing time as the coefficients are not used. At Step 215, an 8-point IW/IDCT is applied vertically. This is illustrated at block 315, which shows that the coefficients represented by the variable C result in pixel data at even coordinates after the 8-point IW/IDCT. The 8-point IW/IDCT implemented in the present embodiment is represented by the butterfly diagram of **Figure 4b.** It should be noted that the sequence of operations is interchangeable; thus the horizontal IW/IDCT applied can be applied after application of the vertical 8-point IW/IDCT.

Referring back to Figure 3, after application of the vertical 8-point IW/IDCT, the 4 × 4 image generated, represented by block 320, contains a high quality portion of the image. This quality image was generated with minimum processing overhead. Thus substantial time savings is realized.

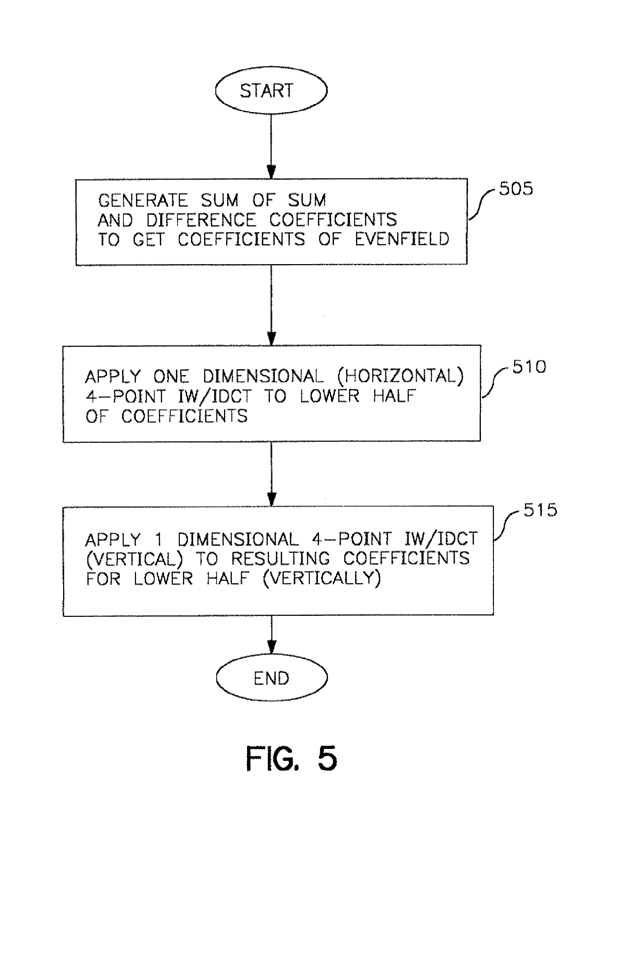

An alternate embodiment is shown with respect to Figure 5. Figure 5 processes a representation of an image which is formed by two 4 x 8 blocks. One 4 × 8 block consists of sum DCT coefficients and one 4 x 8 block consists of difference DCT coefficients. The use of 4 x 8 blocks is defined in "Specificatians of Consumer-Used Digital VCRs Using 6.3 mm Magnetic Tape", HD Digital VCR Conference, (December'1994), pages 27 and 84. It is contemplated that blocks of mxn dimensions may be used, where m is greater than or equal to 4 and n is greater than or equal to 4.

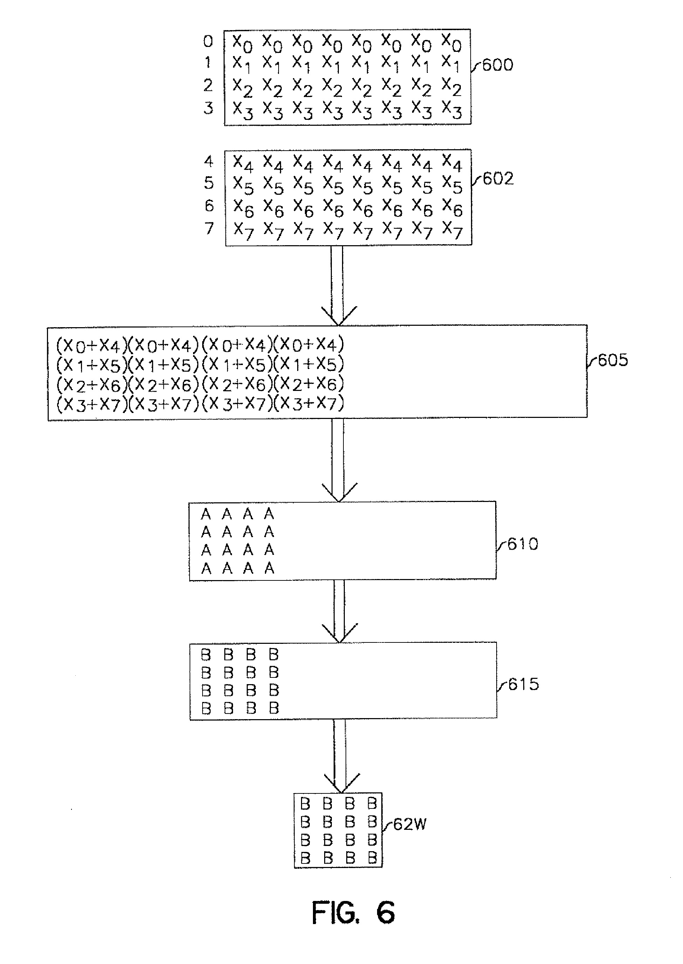

At step 505, a sum of each sum and corresponding difference coefficients are generated to get the coefficients of the even field. Referring to **Figure 6,** blocks 600 and 602 are the original sum and difference coefficients, respectively. Block 605 shows the sum of the sum and corresponding difference coefficients e.g., X0 + X4 of each column, where 0 represents row 0 and 4 represents row 4. It is preferred, in order to realize further time savings as 4-point IW/IDCTs are subsequently applied, that horizontally only the lower half of the sum and difference coefficients are summed.

At step 510 a one-dimensional horizontal 4-point IW/IDCT is applied to the lower half, in the present embodiment, four, coefficients. Block 610 contains the summed coefficients (identified by "A" variable) modified after application of the one-dimensional horizontal 4-point IW/IDCT. Preferably, the 4-point IW/IDCT used is the same as that utilized in the prior process and is represented by the butterfly diagram of **Figure 4a.**

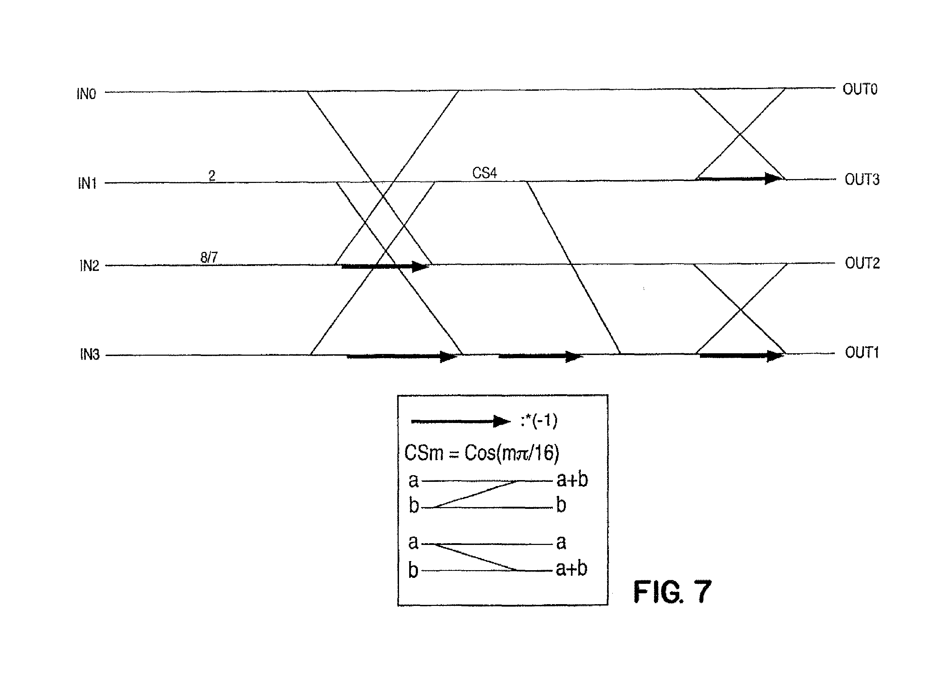

At step 515, a 4-point IW/IDCT is vertically applied four times to the lower half of the coefficients represented in block 610 to generate the pixel data ("B") shown in block 615. One example of a 4-point IW/IDCT vertically applied is represented in **Figure 7**. The IW/IDCT applied differs from that earlier described as the weighting function specified for encoding and therefore the decoding process is slightly different for the two 4 x 8 block representations.

Block 620 represents the portion displayed 4 x 4 image portion generated. It should be noted that steps 505, 510 and 515 are not sequentially dependent; thus, for example, step 510 can be performed before step 505 and 515. Likewise, step 515 can be performed before steps 505 and 510. Step 515 can also be performed before 510 and after 505. Thus, the sequencing is interchangeable Although the sequence can be changed, the sequence of operations affects the total number of computations required. For example, if step 510 is performed before step 505, the horizontal IW/IDCT is applied to the sum and difference coefficients (e.g., 8 rows of data) effectively doubling the number of computations.

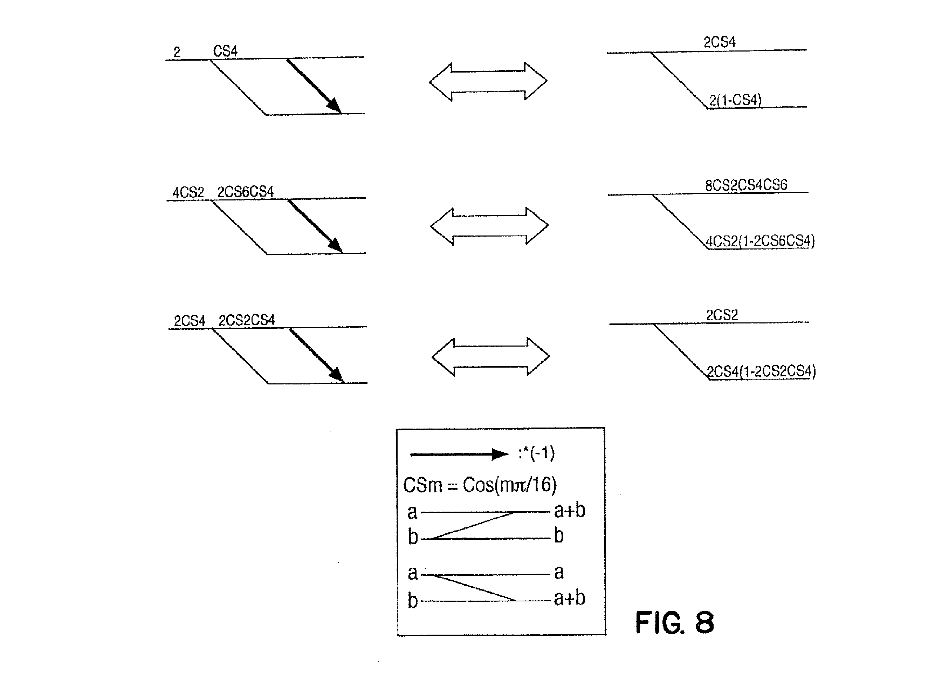

It should be noted that the butterfly diagrams shown in **Figures 4a, 4b** and **7** can be represented a variety of ways. Examples are shown in **Figure 8.** Furthermore, it is contemplated that the calculations performed in accordance with the **butterfly** functions shown can be scaled. The scale can be applied at any stage of the computations so long as the scaling is consistently applied to maintain the relationships among the outputs. For example, a scale factor can be applied at each input immediately prior to each output or at some common stage in between the inputs and outputs.

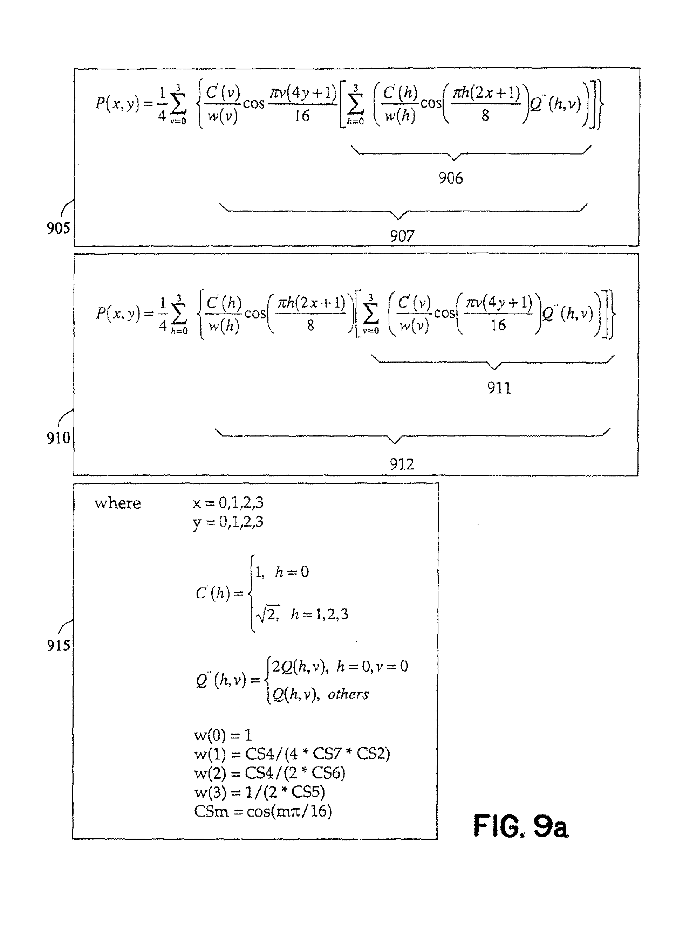

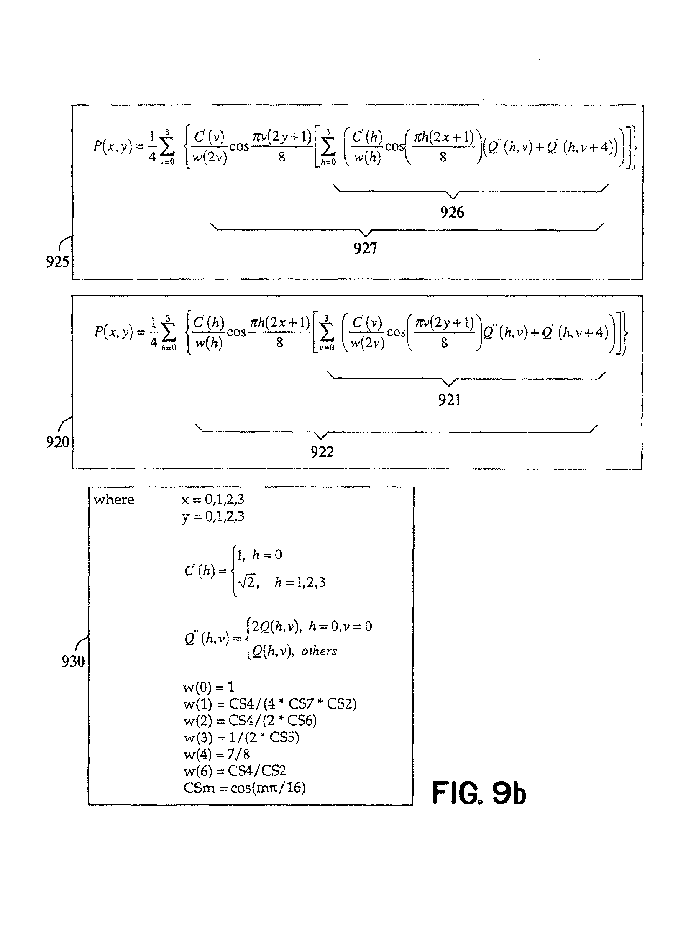

The IW/IDCT processes described in **Figure 2** through **Figure 8** can be represented by mathematical formulae shown in **Figures 9a** and **9b.** For example, the equation 905 illustrates the computation for each block location (x,y) where P(x,y) is the pixel at that location and Q(h,v) is the weighted DCT coefficient at each location (h,v). Equation 905 corresponds to the IW/IDCT process applied to an 8 x 8 block, as described in **Figure 2,** in which the ordering is the horizontal operation 906 (corresponding to e.g., step 205, **Figure 2**) followed by the vertical operation 907 (corresponding to e.g., steps 210, 215, **Figure 2**). Equation 910 represents another embodiment of a two dimensional implementation to generate a 1/4 image in which the vertical operation 911 is performed before the horizontal operation 912. Block 915 defines the parameters used to describe the equations 905, 910.

Similarly, Figure 9b, specifically equations 920 and 925 represent embodiments of two-dimensional IW/IDCTs performed during the process described by **Figure 5**. In equation 920, the vertical operation 921 (corresponding to e.g., steps 505, 515, **Figure 5**) is initiated prior to the horizontal operation 922 (corresponding to e.g., step 510, **Figure 5**) and in equation 925 the horizontal operation 926 (corresponding to, e.g., steps 505, 510) is initiated before the vertical operation 927 (corresponding to, e.g., step 515). The embodiments described implement one-dimensional IW/IDCTs (i.e., a horizontal IW/IDCT and a vertical IW/IDCT). However, as is illustrated above in **Figures 9a** and **9b,** it is contemplated that the IW/IDCTs can be applied two-dimensionally.

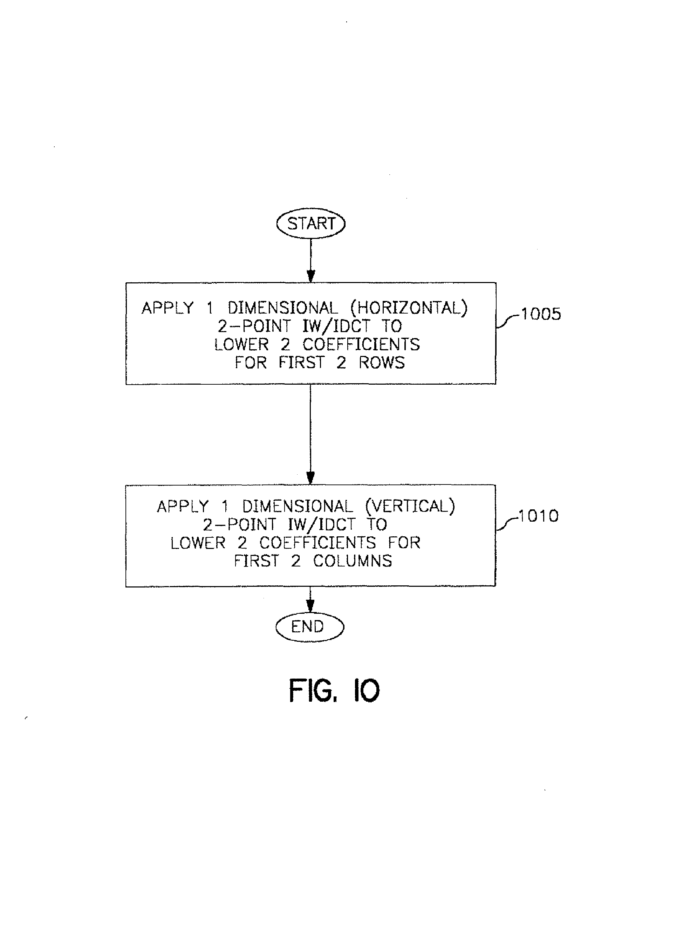

An alternative embodiment, which decodes a 1/16 size image, is shown in Figure 10. The embodiments described herein combine the application of inverse weighting (IW) and inverse discrete cosine transform (IDCT) into one function. The advantage to this is that the number of multiplications or computations required is reduced. However, it should be realized that the IW and IDCT processes described herein can be applied in a serial manner.

One embodiment of the process as applied to an $8 \times 8$ block is illustrated in **Figure 10.** It should be noted that the present embodiment describes the process with respect to an 8x8 block; however it is contemplated that the process may be applied to mxn blocks, where m is greater than or equal to 2 and n is greater than or equal to 2.

Referring to **Figure 10,** at step 1005, a one-dimensional two-point IW/IDCT is applied to the lower two coefficients in the horizontal orientation.

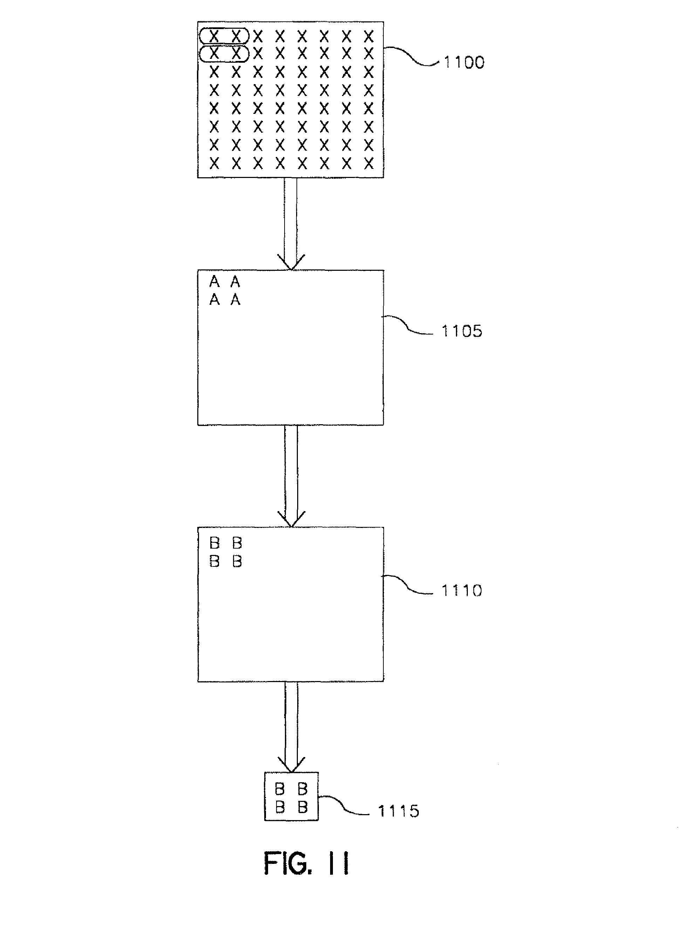

Referring to **Figure 11,** block 1100 is representative of an exemplary 8 x 8 block of DCT coefficients. The index of block 1100 increases from left to right and from top to bottom. The coefficients with smaller indices are referred to as lower coefficients. The coefficients with larger indices are referred to as higher coefficients. Block 1105 is representative of the coefficients ("A") of the block after application of the 2-point IW/IDCT represented by step 1005. It should be noted that the coefficients not shown were not processed by the IW/IDCT of step 1005; therefore, it is preferred that for subsequent operations these coefficients are ignored and not processed to save on processing time. For purposes of simplicity, the unprocessed coefficients are removed from **Figure 11.**

Referring back to **Figure 10** at step 1010, a vertical 2-point IW/IDCT is applied to the lower two coefficients. In **Figure 3** at block 1110, the resultant pixel data ("B") generated from this operation is shown. Block 1115 is representative of the image portion that is generated. It should be noted that the sequence of operations performed are interchangeable wherein step 1010 can be performed before step 1005.

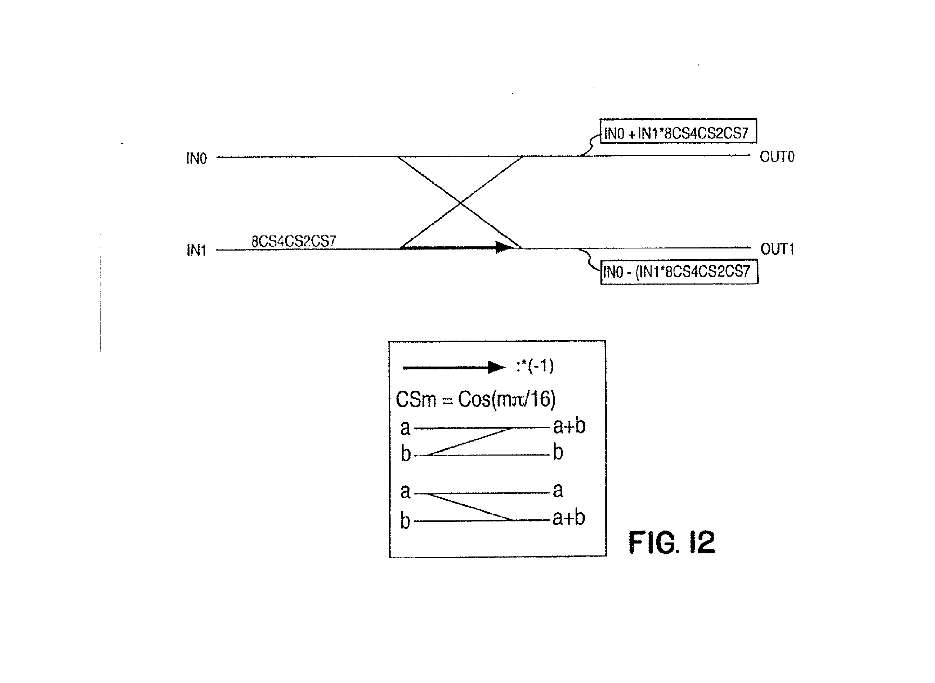

One embodiment of the 2-point IW/IDCT utilized is described by the butterfly diagram of **Figure 12.** This diagrammatic representation is known to one skilled in the art and will not be explained in detail herein. However, the diagonal lines represent addition operations and the arrows represent a multiplication by a value of -1. Furthermore, the values along the line of input, e.g., 8CS4CS2CS7, represents a multiplication of the value, e.g., IN1, by that value shown. In addition, $CSm = \cos(m/16)$; thus, for example, OUT0 = IN0 + IN1 * 8CS4CS2CS7, where $CSm = \cos(m/16)$. OUT1 similarly results in IN0 - IN1* 8CS4C52CS7. It should be noted that the diagram can be represented a variety of ways to convey the end computation performed. In addition, the computations can be scaled. For example, the inputs can be scaled by a common factor or the outputs can be scaled. In addition, the values can be scaled along the computation line in between the input and the output, for example at some common computation stage, so long as the scaling is consistently applied to maintain the relationships among the outputs.

In an alternate embodiment, the coefficients are represented by two 4x8 matrices of sum and difference coefficients, wherein the first array contains sum coefficients and the second array contains the difference coefficients. The use of 4 x 8 blocks is defined in "Specifications of Consumer-Used Digital VCRs Using 6.3 mm Magnetic Tape", HD Digital VCR Conference, (December 1994), page 27 and page 84. It is further contemplated that blocks of mxn dimensions may be used, where m is greater than or equal to 2 and n is greater than or equal to 2.

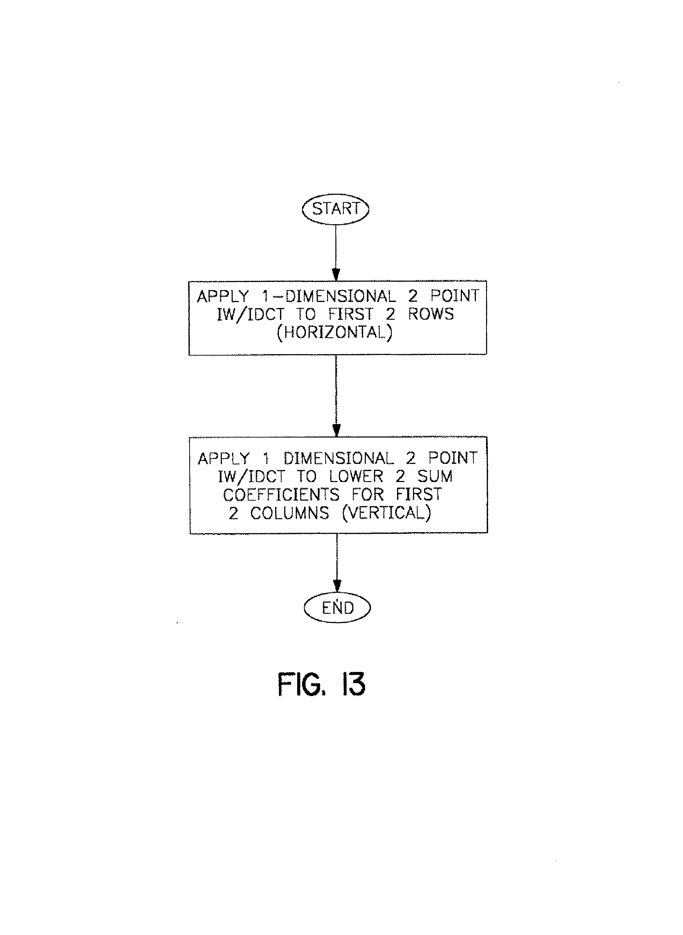

The process for decoding a 1/16 image encoded in this format is described with reference to **Figure 13**. At step 1305 a one-dimensional horizontal 2-point IW/IDCT is applied.

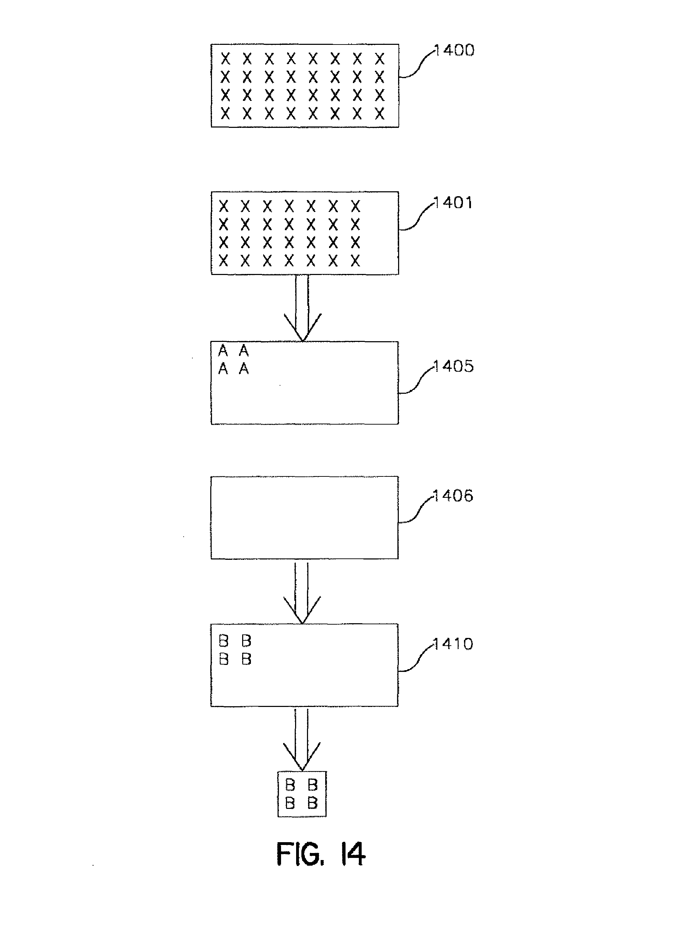

**Figure 14**, blocks 600, 601 illustrate the encoded sum and difference coefficients in two $4 \times 8$ arrays. Blocks 1405 and 1406 represent the arrays with the "A" coefficients after the application of the one-dimensional 2-point IW/IDCT in the horizontal direction. Continuing with the process, at step 1310 in Figure 13, a one-dimensional vertical 2-point IW/IDCT is applied to the lower two sum coefficients in the vertical direction. Block 1410 shows the pixel data ("B") after the one-dimensional 2-point IW/IDCT is applied in the vertical direction. The 4 pixel data is a portion of the image that may subsequently be used to render a video image on a display. It should be noted that the steps 1305 and 1310 are interchangeable wherein step 1310 can be performed before step 1305.

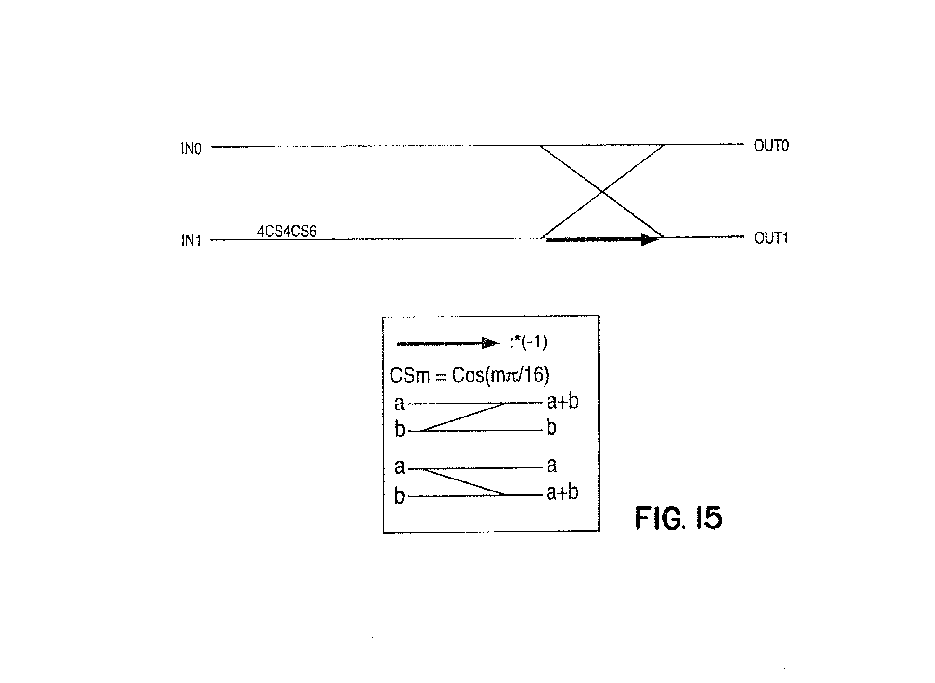

One embodiment of the 2-point IW/IDCT applied at step 1305 is represented by the butterfly diagram of **Figure 12.** One example of the 2-point IW/IDCT applied at step 1310 is represented by the butterfly diagram of Figure 15. As noted earlier, the butterfly diagram can be configured a variety of ways to convey the end computation performed. In addition, the computations can be scaled so long as the scaling is consistently applied to maintain the relationships among the outputs.

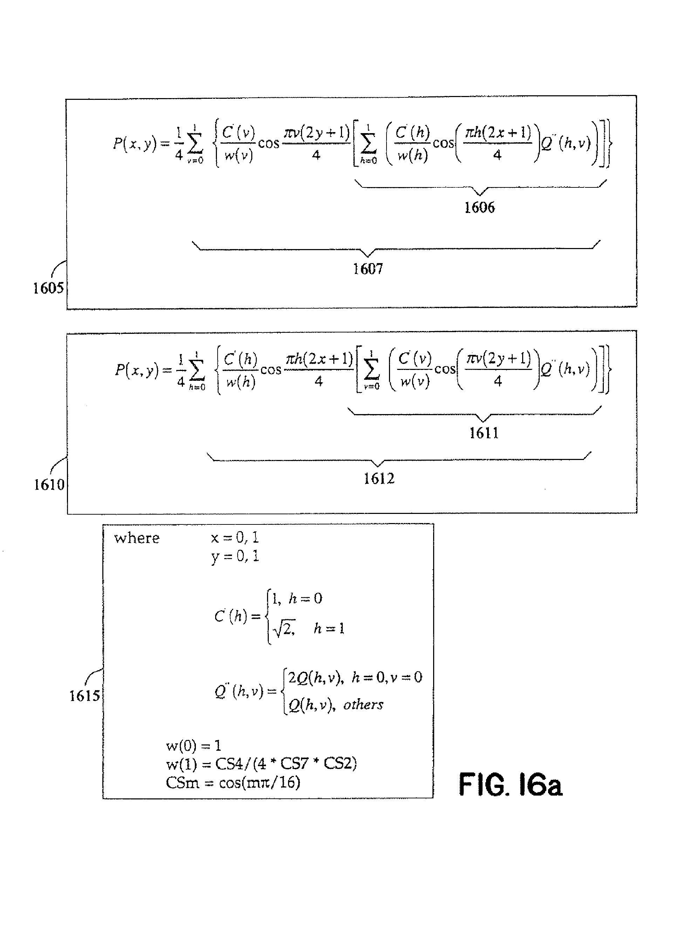

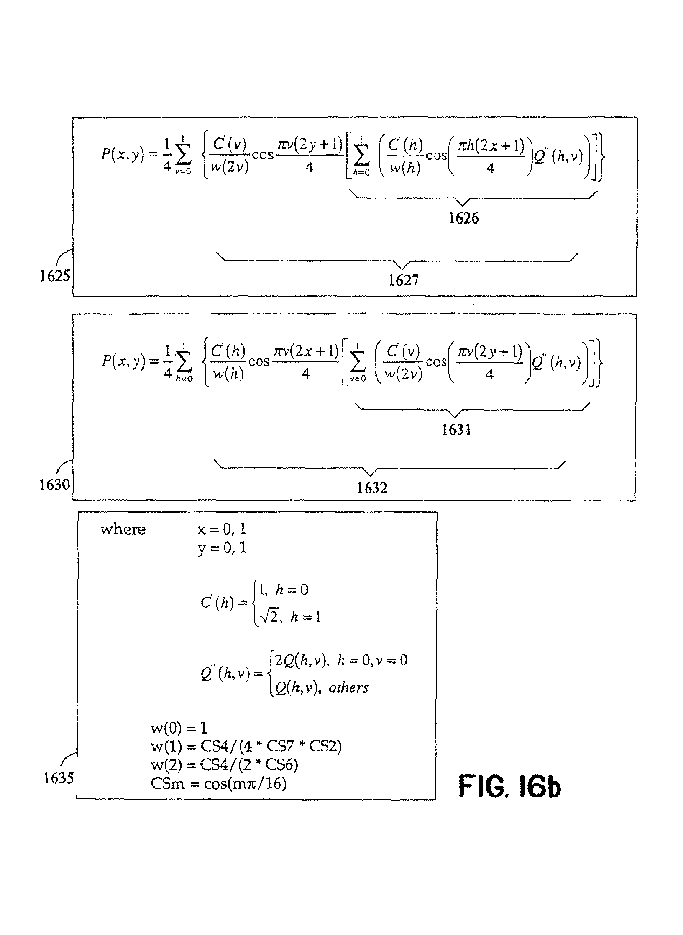

The processes described in **Figures 10** and **13** describe the embodiments which apply one dimensional IW/IDCT operations or processes. The IW/IDCT processes described in **Figure 10** through **Figure 15** can be represented by mathematical formulae in **Figure 16a** and **Figure 16b.** For example, the equation 1605 illustrates the computation for each location (x,y) where p(x,y) is the pixel at that location and Q(h,v) is the weighted DCT coefficient at each location (h,v). The equation 1605 is done in one order where the corresponding horizontal operation 1606 is performed before the vertical operation 1607. Equation 810 forms a similar computation wherein the vertical operation 1611 is performed before the horizontal operation 1612. The values in block 1615 depict the parameters used in equations 1605 and 1610. Similarly, **Figure 16b** illustrates the two-dimensional implementation of the 1/16 size decoding for two 4 x 8 block representations. In equation 1625 the horizontal operation 1626 is performed before the vertical operation 1627 and in equation 1630 the vertical operation 1631 is performed before the horizontal operation 1632. Block 1635 defines the parameters used in the equations 1625 and 1630.

The embodiments described implement one-dimensional IW/IDCTs (i.e., a horizontal IW/IDCT and a vertical IW/IDCT). However, it is contemplated that the IW/IDCTs can be applied two-dimensionally.

The invention has been described in conjunction with the preferred embodiment. It is evident that numerous alternatives, modifications, variations and uses will be apparent to those skilled in the art in light of the foregoing description.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.

1. A method for performing 1/16 size decoding of an encoded digital image comprising the steps of:

applying(1005)a horizontal 2-point inverse weighting function and inverse discrete cosine transform to a lower quarter of an input block of coefficients to produce a second block; and
applying(1010)a vertical 2-point inverse weighting function and inverse discrete cosine transform to a lower quarter of the second block.

2. The method as set forth in clause 1, wherein the input block comprises an mxn matrix, where $m \geq 2$ and $n \geq 2$ and the step of applying a horizontal 2-point inverse weighting function and inverse discrete cosine transform is applied to two rows of lower frequency coefficients.

3. The method as set forth in clause 1, wherein the input block comprises an mxn matrix, where $m \geq 2$ and $n \geq 2$ and the step of a vertical 2-point inverse weighting function and inverse discrete cosine transform is applied to two columns of lower frequency coefficients.

4. The method as set forth in clause 1, wherein the step of applying a horizontal and vertical 2-point inverse weighing function and inverse discrete cosine transform each comprises applying the following function:

5. A method for performing 1/16 size decoding of an encoded digital image comprising the steps of:

applying vertical(1005)2-point inverse weighting function and inverse discrete cosine transform to a lower quarter of an input block of coefficients to produce a second block; and
applying (1010)a horizontal 2-point inverse weighting function and inverse discrete cosine transform to a lower quarter of the second block.

6. The method as set forth in clause 1, wherein the step of applying a horizontal 2-point inverse weighting function and inverse discrete cosine transform comprises applying the following function:

7. The method as set forth in clause 11, wherein the input block comprises two nx4 matrices of sum and difference coefficients and the step of applying a vertical 2-point inverse weighting function and inverse discrete cosine transform comprises applying the following function:

8. A system(110, 115, 120, 125, 130, 135, 140)for performing 1/16 size decoding of an encoded digital image comprising an inverse weighting subcircuit and inverse discrete cosine transform circuit, said circuits configured to perform a horizontal 2-point inverse weighting function and inverse discrete cosine transform to a lower quarter of an input block of coefficients to produce a second block, said circuits further configured to apply a vertical 2-point inverse weighting function and inverse discrete cosine transform to the second block to produce a block 1/16 size of input block.

9. The system as set forth in clause 8, wherein the input block comprises an mxn matrix, where $m \geq 2$ and $n \geq 2$ and the horizontal 2-point inverse weighting function and inverse discrete cosine transform is applied to two rows of lower frequency coefficients.

10. The system as set forth in clause 8, wherein the input block comprises an mxn matrix, where m≥2 and n≥2 and the vertical 2-point inverse weighting function and inverse discrete cosine transform is applied two columns of higher frequency coefficients.

11. The system as set forth in clause 8, wherein the horizontal and vertical 2-point inverse weighting function and inverse discrete cosine transform each comprises the following function:

12. A system(110, 115,120,125,130, 135, 140) for performing 1/16 size decoding of an encoded digital image comprising an inverse weighting subcircuit and inverse discrete cosine transform circuit, said circuits configured to perform a vertical 2-point inverse weighting function and inverse discrete cosine transform to a lower quarter of an input block of coefficients to produce a second block, said circuits further configured to apply a horizontal 2-point inverse weighting function and inverse discrete cosine transform to the second block to produce a block 1/16 size of input block.

13. The system as set forth in clause 12, the input block comprises two m×n matrices, wherein m≥2 and n≥2 of sum and difference coefficients and wherein the horizontal 2-point inverse weighting, function and inverse discrete cosine transform comprises the following function:

14. The system as set forth in clause 13, wherein the input block comprises two mxn matrices, wherein m≥2 and n≥2 of sum and difference coefficients and the vertical 2-point inverse weighting function and inverse discrete cosine transform comprises the following function:

15. A computer readable medium (160) containing executable instructions which, when executed in a processing system(155), causes the system to perform the steps for performing 1/4 size decoding of an encoded digital image, comprising:

applying a horizontal 2-point inverse weighting function and inverse discrete cosine transform to a lower quarter of an input block of coefficients to produce a second block; and
applying a vertical 2-point inverse weighting function and inverse discrete cosine transform to a lower quarter of the second block.

16. The computer readable medium as set forth in clause 15, wherein the input block comprises an mxn matrix, where $m \geq 2$ and $n \geq 2$ and the instruction of applying a horizontal 2-point inverse weighting function and inverse discrete cosine transform is applied to two rows of lower frequency coefficients.

17. The computer readable medium as set forth in clause 15, wherein the input block comprises and mxn matrix, where $m \geq 2$ and $n \geq 2$ and the instruction of applying a horizontal 2-point inverse weighting function and inverse discrete cosine transform is applied to two columns of lower frequency coefficients.

18. The computer readable medium as set forth in clause 17, wherein the instruction of applying a horizontal and vertical 2-point inverse weighting function and inverse discrete cosine transform each comprises applying the following function:

19. A computer readable medium containing executable instructions which, when executed in a processing system, causes the system to perform the steps for performing 1/4 size decoding of an encoded digital image, comprising:

applying vertical 2-point inverse weighting function and inverse discrete cosine transform to a lower quarter of an input block of coefficients to produce a second block; and
applying a horizontal 2-point inverse weighting function and inverse discrete cosine transform to a lower quarter of the second block.

20. The computer readable medium as set forth in clause 17, wherein the input block comprises two mxn matrices of sum and difference coefficients, where m≥2 and n≥2 and the instruction of applying a horizontal 2-point inverse weighting function and inverse discrete cosine transform is applied to two rows of lower frequency coefficients.

21. The computer readable medium as set forth in clause 17, wherein the input block comprises two mxn matrices of sum and difference coefficients, where m≥2 and n≥2 and the instruction of applying a vertical 2-point inverse weighting function and inverse discrete cosine transform is applied to two rows of sums of sum and difference coefficients.

22. The computer readable medium as set forth in clause 17, wherein the input block comprises two mxn matrices of sum and difference coefficients, where m≥2 and n≥2 and the instruction of applying a horizontal 2-point inverse weighting function and inverse discrete cosine transform comprises the following function:

23. The computer readable medium as set forth in clause 17, wherein the input block comprises two mxn matrices of sum and difference coefficients, where m≥2 and n≥2 and the instruction of applying a vertical 2-point inverse weighting function and inverse discrete cosine transform comprises the following function:

24. A method for performing 1/4 size decoding of an encoded digital image comprising the steps of:

applying (205)a horizontal 4-point inverse weighting function and inverse discrete cosine transform (DCT) to a lower half of an input block of coefficients to produce a second block;
setting (210) a higher half of the second block to a value of zero;
applying (215) a vertical 8-point inverse weighting function and inverse discrete cosine transform to the second block; and
extracting even columns as output to produce a block 1 /4 size of input block.

25. The method as set forth in clause 24, wherein the input block comprises an mxn matrix and the step of applying a horizontal 4 point inverse weighting function $n \geq 4$, $m \geq 4$ and inverse discrete cosine transform is applied to four rows of lower frequency coefficients.

26. The method as set forth in clause 24, wherein the input block comprises an mxn matrix where $n \geq 8$ and $m \geq 4$ and the step of setting sets the four rows of higher frequency coefficients to zero.

27. The method as set forth in clause 24, wherein the step of applying a horizontal 4-point inverse weighting function and inverse discrete cosine transform comprises applying the following function:

28. The method as set forth in clause 24, wherein the step of applying a vertical 8-point inverse weighting function and inverse discrete cosine transform comprises applying the following function:

Where:

CSm = Cos(m π/16)

29. A method for performing 1/4 size decoding of an encoded digital image comprising the steps of:

> setting a higher half of an input block to a value of zero;
> applying a vertical 8-point inverse weighting function and inverse discrete cosine transform to produce a second block;
> applying a horizontal 4-point inverse weighting function and inverse discrete cosine transform to a lower half of the second block of coefficients; and
> extracting even columns as output to produce a block 1/4 size of input block.

30. A method for performing 1/4 size decoding of an encoded digital image comprising the steps of:

> applying (510) a horizontal 4-point inverse weighting function and inverse discrete cosine transform to a lower half of an input block of sum and difference coefficients to produce a second block;
> generating a sum of sum and difference coefficients to produce a third block; and
> applying (515) a vertical 4-point inverse weighting function and inverse discrete cosine transform to the third second block.

31. The method as set forth in clause 30, wherein the input block comprises two mxn matrices where n≥4 and m≥4 and the step of applying a horizontal 4-point inverse weighting function and inverse discrete cosine transform is applied to four rows of lower frequency coefficients.

32. The method as set forth in clause 30, wherein the input block comprises two mxn matrices where n≥4 and m≥4 and the step of applying a vertical 4-point inverse weighting function and inverse discrete cosine transform is applied to four rows of sums of sum and difference coefficients.

33. The method as set forth in clause 30, wherein the step of applying a horizontal 4-point inverse weighting function and inverse discrete cosine transform comprises applying the following function:

34. The method as set forth in clause 30, wherein the step of applying a vertical 8-point inverse weighting function and inverse discrete cosine transform comprises applying the following function:

35. A method for performing 1/4 size decoding of an encoded digital image comprising the steps of:

generating (515) a sum of sum and difference coefficients to produce a second block;
applying(510)a horizontal 4-point inverse weighting function and inverse discrete cosine transform to a lower half of the second block of sum and difference coefficients to produce a third block; and
applying (515) a vertical 4-point inverse weighting function and inverse discrete cosine transform to the third block.

36. A system(110, 115, 120, 125,130, 135,140)for performing 1/4 size decoding of an encoded digital image comprising and inverse weighting subcircuit and inverse discrete cosine transform circuit, said circuits configured to perform a horizontal 4-point inverse weighting function and inverse discrete cosine transform to a lower half of an input block of coefficients to produce a second block, said circuits further configured to applying a vertical 8-point inverse weighting function and inverse discrete cosine transform to the second block to produce a third block, wherein a higher half of the second block is set to zero, and even columns of the third block are used as output to produce a block 1/4 size of input block.

37. The system as set forth in clause 36, wherein the input block comprises an mxn matrix n≥4 and m≥4 and four rows of higher frequency coefficients are set to zero in the second block.

38. The system as set forth in clause 36, wherein the horizontal 4-point inverse weighting function and inverse discrete cosine transform comprises the following function:

39. The system as set forth in clause 36, wherein the vertical 8-point inverse weighting function and inverse discrete cosine transform comprises the following function:

40. A system(110, 115, 120, 125, 130, 135,140)for performing 1/4 size decoding of an encoded digital image comprising and inverse weighting
subcircuit and inverse discrete cosine transform circuit, said circuits configured to perform a vertical 8-point inverse weighting function and inverse discrete cosine transform to an input block to produce a second block, wherein a higher half of the input block is set to zero, and said circuits further configured to apply a horizontal 4-point inverse weighting function and inverse discrete cosine transform to a lower half of an input block of coefficients to produce a third block, wherein even columns of the third block are used as output to produce a block 1/4 size of input block.

41. A system(110, 115, 120, 125, 130, 135, 140)for performing 1/4 size decoding of an encoded digital image comprising an inverse weighting subcircuit and inverse discrete cosine transform circuit, said circuits configured to perform a horizontal 4-point inverse weighting function and inverse discrete cosine transform to a lower half of an input block of sum and difference coefficients to produce a second block, and to perform a vertical 4-point inverse weighting function and inverse discrete cosine transform to a block comprising sums of sum and difference coefficients.

42. The system as set forth in clause 41, wherein the input block comprises two mxn matrices where m≥4 and n≥4 and the horizontal 4-point inverse weighting function and inverse discrete cosine transform is applied to four rows of lower frequency coefficients.

43. The system as set forth in clause 41, wherein the input block comprises two mxn matrices where m≥4 and n≥4 and the vertical 4-point inverse weighting function and inverse discrete cosine transform is applied to four rows of sums of sum and difference coefficients.

44. The system as set forth in clause 41, wherein the horizontal 4-point inverse weighting function and inverse discrete cosine transform comprises the following function:

45. The system as set forth in clause 41, wherein the vertical 8-point inverse weighting function and inverse discrete cosine transform comprises the following function:

Where:

$$\text{CSm} = \text{Cos}(m\ /16)$$

46. A system(110, 115, 120, 125, 130, 135, 140)for performing 1/4 size decoding of an encoded digital image comprising an inverse weighting subcircuit and inverse discrete cosine transform circuit, said circuits configured to perform a vertical 4-point inverse weighting function and inverse discrete cosine transform to a block comprising sums of sum and difference coefficients and to perform a horizontal 4-point inverse weighting function to produce a second block and perform an inverse discrete cosine transform to a lower half of the second block.

47. A computer readable medium (160)containing executable instructions which, when executed in a processing system (155), causes the system to perform the steps for performing 1/4 size decoding of an encoded digital image, comprising:

applying a horizontal 4-point inverse weighting function and inverse discrete cosine transform to a lower half of an input block of coefficients to produce a second block;
setting a higher half of the second block to a value of zero;
applying a vertical 8-point inverse weighting function and inverse discrete cosine transform (DCT) to the second block; and
extracting even columns as output to produce a block 1/4 size of input block.

48. The computer readable medium as set forth in clause 47, wherein the input block comprises and mxn matrix where m≥4 and n≥4 and the instruction of applying a horizontal 4-point inverse weighting function and inverse discrete cosine transform is applied to four rows of lower frequency coefficients.

49. The computer readable medium as set forth in clause 48, wherein the input block comprises and mxn matrix where m≥4 and n≥4 and the instruction of setting sets the four rows of higher frequency coefficients to zero.

50. The computer readable medium as set forth in clause 48, wherein the instruction of applying a horizontal 4-point inverse weighting function and inverse discrete cosine transform comprises the following function:

51. The computer readable medium as set forth in clause 48, wherein the instruction of applying a vertical 8-point inverse weighting function and inverse discrete cosine transform comprises the following function:

52. A computer readable medium (160)containing executable instructions which, when executed in a processing system (155), causes the system to perform the steps for performing 1/4 size decoding of an encoded digital image, comprising:

setting a higher half of an input block to a value of zero;
applying a vertical 8-point inverse weighting function and inverse discrete cosine transform to produce a second block;
applying a horizontal 4-point inverse weighting function and inverse discrete cosine transform to a lower half of the second block of coefficients; and
extracting even columns as output to produce a block 1/4 size of input block.

53. A computer readable medium (160)containing executable instructions which, when executed in a processing system(155), causes the system to perform the steps for performing 1/4 size decoding of an encoded digital image, comprising:

applying a horizontal 4-point inverse weighting function and inverse discrete cosine transform to a lower half of an input block of sum and difference coefficients to produce a second block;
generating a sum of sum and difference coefficients to produce a third block; and
applying a vertical 4-point inverse weighting function and inverse discrete cosine transform to the third second block.

54. The computer readable medium as set forth in clause 53, wherein the input block comprises two 4x8 matrices and the instruction of applying a horizontal 4-point inverse weighting function and inverse discrete cosine transform is applied to four rows of lower frequency coefficients.

55. The computer readable medium as set forth in clause 53, wherein the input block comprises two 4x8 matrices and the instruction of applying a vertical 4-point inverse weighting function and inverse discrete cosine transform is applied to four rows of sums of sum and difference coefficients.

56. The computer readable medium as set forth in clause 53, wherein the instruction of applying a horizontal 4-point inverse weighting function and inverse discrete cosine transform comprises the following function:

57. The computer readable medium as set forth in clause 53, wherein the instruction of applying a vertical 8-point inverse weighting function and inverse discrete cosine transform comprises the following function:

Where:

$$\longrightarrow \ast(-1)$$
$$CSm = Cos(m \ /16)$$

58. A computer readable medium (160)containing executable instructions which, when executed in a processing system (155) causes the system to perform the steps for performing 1/4 size decoding of an encoded digital image, comprising:

generating a sum of sum and difference coefficients to produce a second block;
applying a vertical 4-point inverse weighting function and inverse discrete cosine transform to the second block to produce a third block.
applying a horizontal 4-point inverse weighting function and inverse discrete cosine transform to a lower half of an third block of sum and difference coefficients.

**Claims**

1. A method for performing 1/4 size decoding of an encoded digital image comprising the steps of:

applying a horizontal 4-point inverse weighting function and inverse discrete cosine transform (DCT) to a horizontally lower frequency half of an input block of coefficients to produce a second block;
setting a vertically higher frequency half of the second block to a value of zero;
applying a vertical 8-point inverse weighting function and inverse discrete cosine transform to the second block; and
extracting even columns as output to produce a block 1/4 size of the input block.

2. The method as set forth in claim 1, wherein the input block comprises an mxn matrix, where $n \geq 4$ and $m \geq 4$, and the step of applying a horizontal 4-point inverse weighting function and inverse discrete cosine transform is applied to four rows of lower frequency coefficients.

3. The method as set forth in claim 1, wherein the input block comprises an mxn matrix where $n \geq 8$ and $m \geq 4$ and the step of setting sets four rows of higher frequency coefficients to zero.

4. The method as set forth in claim 1, wherein the ¼ size block comprises pixel values calculated according to the following equation:

$$P(x,y) = \frac{1}{4}\sum_{v=0}^{3}\left\{\frac{C'(v)}{w(v)}\cos\frac{\pi v(4y+1)}{16}\left[\sum_{h=0}^{3}\left(\frac{C'(h)}{w(h)}\cos\left(\frac{\pi h(2x+1)}{8}\right)Q''(h,v)\right)\right]\right\}$$

where P(x,y) represents the pixel value at location (x,y); C'(h) = 1 when h = 0 or $\sqrt{2}$ when h = 1,2,3; Q''(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2); w(2) = CS4/(2*CS6); w(3) = 1/(2*CS5); and CSm = cos(mπ/16).

**5.** A method for performing 1/4 size decoding of an encoded digital image comprising the steps of:

setting a vertically higher frequency half of an input block of coefficients to a value of zero;
applying a vertical 8-point inverse weighting function and inverse discrete cosine transform to the input block produce a second block;
applying a horizontal 4-point inverse weighting function and inverse discrete cosine transform to a horizontally lower frequency half of the second block; and
extracting even columns as output to produce a block 1/4 size of the input block.

**6.** The method as set forth in claim 5, wherein the ¼ size block comprises pixel values calculated according to the following equation:

$$P(x,y) = \frac{1}{4}\sum_{h=0}^{3}\left\{\frac{C'(h)}{w(h)}\cos\frac{\pi h(2x+1)}{8}\left[\sum_{v=0}^{3}\left(\frac{C'(v)}{w(v)}\cos\left(\frac{\pi v(4y+1)}{16}\right)Q''(h,v)\right)\right]\right\}$$

where P(x,y) represents the pixel value at location (x,y); C'(h) = 1 when h = 0 or $\sqrt{2}$ when h = 1,2,3; Q''(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2); w(2) = CS4/(2*CS6); w(3) = 1/(2*CS5); and CSm = cos(mπ/16).

**7.** A method for performing 1/4 size decoding of an encoded digital image comprising the steps of:

generating a sum of sum and difference coefficients from an input block to produce a second block;
applying a horizontal 4-point inverse weighting function and inverse discrete cosine transform to a horizontally lower frequency half of the second block to produce a third block; and
applying a vertical 4-point inverse weighting function and inverse discrete cosine transform to the third block to produce a block 1/4 size of the input block.

**8.** The method as set forth in claim 7, wherein the input block comprises two mxn matrices where n ≥ 4 and m ≥ 4 and the step of applying a horizontal 4-point inverse weighting function and inverse discrete cosine transform is applied to four rows of lower frequency coefficients.

**9.** The method as set forth in claim 7, wherein the input block comprises two mxn matrices where n ≥ 4 and m ≥ 4 and the step of applying a vertical 4-point inverse weighting function and inverse discrete cosine transform is applied to four rows of lower frequency coefficients.

**10.** The method as set forth in claim 7, wherein the ¼ size block comprises pixel values calculated according to the following equation:

$$P(x,y) = \frac{1}{4}\sum_{v=0}^{3}\left\{\frac{C'(v)}{w(2v)}\cos\frac{\pi v(2y+1)}{8}\left[\sum_{h=0}^{3}\left(\frac{C'(h)}{w(h)}\cos\left(\frac{\pi h(2x+1)}{8}\right)\right)(Q'(h,v) + Q''(h,v+4))\right]\right\}$$

where P(x,y) represents the pixel value at location (x,y); C'(h) = 1 when h = 0 or $\sqrt{2}$ when h = 1,2,3; Q"(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

**11.** A method for performing 1/4 size decoding of an encoded digital image comprising the steps of:

generating a sum of sum and difference coefficients in an input block to produce a second block;
applying a vertical 4-point inverse weighting function and inverse discrete cosine transform to the second block to produce a third block; and
applying a horizontal 4-point inverse weighting function and inverse discrete cosine transform to a horizontally lower frequency half of the third block to produce a block 1/4 size of the input block.

**12.** The method as set forth in claim 11, wherein the ¼ size block comprises pixel values calculated according to the following equation:

$$P(x,y) = \frac{1}{4}\sum_{h=0}^{3}\left\{\frac{C'(h)}{w(h)}\cos\frac{\pi v(2x+1)}{8}\left[\sum_{v=0}^{3}\left(\frac{C'(v)}{w(2v)}\cos\left(\frac{\pi v(2y+1)}{8}\right)\right)(Q''(h,v) + Q''(h,v+4))\right]\right\}$$

where P(x,y) represents the pixel value at location (x,y); C'(h) = 1 when h = 0 or $\sqrt{2}$ when h = 1,2,3; Q"(h,v) = 2Q (h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

**13.** A system for performing 1/4 size decoding of an encoded digital image comprising an inverse weighting subcircuit and inverse discrete cosine transform circuit, said circuits configured to apply a horizontal 4-point inverse weighting function and inverse discrete cosine transform to a horizontally lower frequency half of an input block of coefficients to produce a second block, said circuits further configured to apply a vertical 8-point inverse weighting function and inverse discrete cosine transform to the second block to produce a third block, wherein a vertically higher frequency half of the second block is set to zero, and even columns of the third block are used as output to produce a block 1/4 size of input block.

**14.** The system as set forth in claim 13, wherein the input block comprises an mxn matrix, where n≥ 4 and m≥ 4, and the vertical 4-point inverse weighting function and inverse discrete cosine transform is applied to four rows of lower frequency coefficients.

**15.** The system as set forth in claim 13, wherein the input block comprises an mxn matrix n ≥ 4 and m ≥ 4 and four rows of higher frequency coefficients are set to zero in the second block.

**16.** The system as set forth in claim 13, wherein the ¼ size block comprises pixel values calculated according to the following equation:

$$P(x,y) = \frac{1}{4}\sum_{v=0}^{3}\left\{\frac{C'(v)}{w(2v)}\cos\frac{\pi v(2y+1)}{8}\left[\sum_{h=0}^{3}\left(\frac{C'(h)}{w(h)}\cos\left(\frac{\pi h(2x+1)}{8}\right)\right)(Q'(h,v) + Q''(h,v+4))\right]\right\}$$

where P(x,y) represents the pixel value at location (x,y); C'(h) = 1 when h = 0 or $\sqrt{2}$ when h = 1,2,3; Q"(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

**17.** A system for performing 1/4 size decoding of an encoded digital image comprising an inverse weighting subcircuit and inverse discrete cosine transform circuit, said circuits configured to apply a vertical 8-point inverse weighting function and inverse discrete cosine transform to an input block of coefficients to produce a second block, said circuits further configured to apply a horizontal 4-point inverse weighting function and inverse discrete cosine transform to a horizontally lower frequency half of the second block to produce a third block, wherein a vertically higher frequency half of the input block is set to zero and even columns af the third block are used as output to produce a block 1/4 size of input block.

**18.** The system as set forth in claim 17, wherein the ¼ size block comprises pixel values calculated according to the following equation:

$$P(x,y) = \frac{1}{4}\sum_{h=0}^{3}\left\{\frac{C'(h)}{w(h)}\cos\frac{\pi v(2x+1)}{8}\left[\sum_{v=0}^{3}\left(\frac{C'(v)}{w(2v)}\cos\left(\frac{\pi v(2y+1)}{8}\right)\right)(Q''(h,v)+Q''(h,v+4))\right]\right\}$$

where P(x,y) represents the pixel value at location (x,y); C'(h) = 1 when h = 0 or $\sqrt{2}$ when h = 1,2,3; Q''(h,v) = 2Q (h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

**19.** A system for performing 1/4 size decoding of an encoded digital image comprising an inverse weighting subcircuit and inverse discrete cosine transform circuit, said circuits configured to apply a horizontal 4-point inverse weighting function and inverse discrete cosine transform to a horizontally lower frequency half of a second block of sum and difference coefficients generated from an input block to produce a third block, and to apply a vertical 4-point inverse weighting function and inverse discrete cosine transform to the third
) block to produce a block 1/4 size of the input block.

**20.** The system as set forth in claim 19, wherein the input block comprises two mxn matrices where m ≥ 4 and n ≥ 4 and the horizontal 4-point inverse weighting function and inverse discrete cosine transform is applied to four rows of lower frequency coefficients.

**21.** The system as set forth in claim 19, wherein the input block comprises two mxn matrices where m ≥ 4 and n ≥ 4 and the vertical 4-point inverse weighting function and inverse discrete cosine transform is applied to four rows of lower frequency coefficients.

**22.** The system as set forth in claim 19, wherein the ¼ size block comprises pixel values calculated according to the following equation:

$$P(x,y) = \frac{1}{4}\sum_{v=0}^{3}\left\{\frac{C'(v)}{w(2v)}\cos\frac{\pi v(2y+1)}{8}\left[\sum_{h=0}^{3}\left(\frac{C'(h)}{w(h)}\cos\left(\frac{\pi h(2x+1)}{8}\right)\right)(Q'(h,v)+Q''(h,v+4))\right]\right\}$$

where P(x,y) represents the pixel value at location (x,y); C'(h) = 1 when h = 0 or $\sqrt{2}$ when h = 1,2,3; Q''(h,v) = 2Q (h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

**23.** A system for performing 1/4 size decoding of an encoded digital image comprising an inverse weighting subcircuit and inverse discrete cosine transform circuit, said circuits configured to apply a vertical 4-point inverse weighting function and inverse discrete cosine transform to a second block comprising sums of sum and difference coefficients generated from an input block to produce a third block, and to apply a horizontal 4-point inverse weighting function and inverse discrete cosine transform to a horizontally lower frequency half of the third block to produce a block 1/4 size of the input block.

24. The system as set forth in claim 23, wherein the ¼ size block comprises pixel values calculated according to the following equation:

$$P(x,y) = \frac{1}{4}\sum_{h=0}^{3}\left\{\frac{C'(h)}{w(h)}\cos\frac{\pi v(2x+1)}{8}\left[\sum_{v=0}^{3}\left(\frac{C'(v)}{w(2v)}\cos\left(\frac{\pi v(2y+1)}{8}\right)(Q''(h,v)+Q''(h,v+4))\right)\right]\right\}$$

where P(x,y) represents the pixel value at location (x,y); C'(h) = 1 when h = 0 or $\sqrt{2}$ when h = 1,2,3; Q"(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

25. A computer-readable medium containing executable instructions which, when executed in a processing system, causes the processing system to perform the steps for performing 1/4 size decoding of an encoded digital image, comprising:

applying a horizontal 4-point inverse weighting function and inverse discrete cosine transform (DCT) to a horizontally lower frequency half of an input block of coefficients to produce a second block;
setting a vertically higher frequency half of the second block to a value of zero;
applying a vertical 8-point inverse weighting function and inverse discrete cosine transform to the second block; and
extracting even columns as output to produce a block 1/4 size of the input block.

26. The computer-readable medium as set forth in claim 25, wherein the input block comprises an mxn matrix, where n ≥ 4 and m ≥ 4, and the step of applying a horizontal 4-point inverse weighting function and inverse discrete cosine transform is applied to four rows of lower frequency coefficients.

27. The computer-readable medium as set forth in claim 25, wherein the input block comprises an mxn matrix where n ≥ 8 and m ≥ 4 and the step of setting sets four rows of higher frequency coefficients to zero.

28. The computer-readable medium as set forth in claim 25, wherein the ¼ size block comprises pixel values calculated according to the following equation:

$$P(x,y) = \frac{1}{4}\sum_{v=0}^{3}\left\{\frac{C'(v)}{w(v)}\cos\frac{\pi v(4y+1)}{16}\left[\sum_{h=0}^{3}\left(\frac{C'(h)}{w(h)}\cos\left(\frac{\pi h(2x+1)}{8}\right)Q''(h,v)\right)\right]\right\}$$

where P(x,y) represents the pixel value at location (x,y); C'(h) = 1 when h = 0 or $\sqrt{2}$ when h = 1,2,3; Q"(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); and CSm = cos(mπ/16).

29. A computer-readable medium containing executable instructions which, when executed in a processing system, causes the processing system to perform the steps for performing 1/4 size decoding of an encoded digital image, comprising:

setting a vertically higher frequency half of an input block of coefficients to a value of zero;
applying a vertical 8-point inverse weighting function and inverse discrete cosine transform to the input block produce a second block;
applying a horizontal 4-point inverse weighting function and inverse discrete cosine transform to a horizontally lower frequency half of the second block; and
extracting even columns as output to produce a block 1/4 size of the input block.

30. The computer-readable medium as set forth in claim 29, wherein the ¼ size block comprises pixel values calculated according to the following equation:

$$P(x,y) = \frac{1}{4}\sum_{h=0}^{3}\left\{\frac{C'(h)}{w(h)}\cos\frac{\pi h(2x+1)}{8}\left[\sum_{v=0}^{3}\left(\frac{C'(v)}{w(v)}\cos\left(\frac{\pi v(4y+1)}{16}\right)Q''(h,v)\right)\right]\right\}$$

where P(x,y) represents the pixel value at location (x,y); C'(h) = 1 when h = 0 or $\sqrt{2}$ when h = 1,2,3; Q''(h,v) = 2Q (h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); and CSm = cos(mπ/16).

31. A computer-readable medium containing executable instructions which, when executed in a processing system, causes the processing system to perform the steps for performing 1/4 size decoding of an encoded digital image, comprising:

A method for performing 1/4 size decoding of an encoded digital image comprising the steps of:

generating a sum of sum and difference coefficients from an input block to produce a second block;
applying a horizontal 4-point inverse weighting function and inverse discrete cosine transform to a horizontally lower frequency half of the second block to produce a third block; and
applying a vertical 4-point inverse weighting function and inverse discrete cosine transform to the third block to produce a block 1/4 size of the input block.

32. The computer-readable medium as set forth in claim 31, wherein the input block comprises two mxn matrices where n ≥ 4 and m ≥ 4 and the step of applying a horizontal 4-point inverse weighting function and inverse discrete cosine transform is applied to four rows of lower frequency coefficients.

33. The computer-readable medium as set forth in claim 31, wherein the input block comprises two mxn matrices where n ≥ 4 and m ≥ 4 and the step of applying a vertical 4-point inverse weighting function and inverse discrete cosine transform is applied to four rows of lower frequency coefficients.

34. The computer-readable medium as set forth in claim 31, wherein the ¼ size block comprises pixel values calculated according to the following equation:

$$P(x,y) = \frac{1}{4}\sum_{v=0}^{3}\left\{\frac{C'(v)}{w(2v)}\cos\frac{\pi v(2y+1)}{8}\left[\sum_{h=0}^{3}\left(\frac{C'(h)}{w(h)}\cos\left(\frac{\pi h(2x+1)}{8}\right)(Q'(h,v)+Q''(h,v+4))\right)\right]\right\}$$

where P(x,y) represents the pixel value at location (x,y); C'(h) = 1 when h = 0 or $\sqrt{2}$ when h = 1,2,3; Q''(h,v) = 2Q(h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

35. A computer-readable medium containing executable instructions which, when executed in a processing system, causes the processing system to perform the steps for performing 1/4 size decoding of an encoded digital image, comprising:

generating a sum of sum and difference coefficients in an input block to produce a second block;
applying a vertical 4-point inverse weighting function and inverse discrete cosine transform to the second block to produce a third block; and
applying a horizontal 4-point inverse weighting function and inverse discrete cosine transform to a horizontally lower frequency half of the third block to produce a block 1/4 size of the input block.

36. The computer-readable medium as set forth in claim 35, wherein the ¼ size block comprises pixel values calculated according to the following equation:

$$P(x,y) = \frac{1}{4}\sum_{h=0}^{3}\left\{\frac{C'(h)}{w(h)}\cos\frac{\pi v(2x+1)}{8}\left[\sum_{v=0}^{3}\left(\frac{C'(v)}{w(2v)}\cos\left(\frac{\pi v(2y+1)}{8}\right)\right)(Q''(h,v)+Q''(h,v+4))\right]\right\}$$

where P(x,y) represents the pixel value at location (x,y); C'(h) = 1 when h = 0 or $\sqrt{2}$ when h = 1,2,3; Q''(h,v) = 2Q (h,v) when h = 0, v = 0, or Q(h,v) when h ≠ 0 or v ≠ 0, Q(h,v) represents the weighted DCT coefficient at each location (h,v); w(0) = 1; w(1) = CS4/(4*CS7*CS2);
w(2) = CS4/(2*CS6); w(3) = 1/(2*CS5); w(4)=7/8; w(6)=CS4/CS2; and CSm = cos(mπ/16).

FIG. la

FIG. lb

START

APPLY ONE DIMENSIONAL
HORIZONTAL 4-POINT
IW/IDCT TO LOWER 1/2
COEFFICIENTS-IN FIRST 4
ROWS
205

SET HIGHER 1/2 COEFFICIENT
IN VERTICAL DIRECTION TO
ZERO
210

APPLY 1 DIMENSIONAL
(VERTICAL) 8-POINT IW/IDCT
TO FIRST 4 COLUMNS USE EVEN
POINTS AS OUTPUT
215

END

# FIG. 2

FIG. 3

EP 2 284 793 A1

INO + IN2*4CS6CS4 + IN1*4CS7 + IN3*4CS5CS2+CS4* (IN1*4CS7-IN3*4CS5CS2)

IN0 + IN2* 4CS6CS4

IN0

410

IN0 - IN2*4CS6CS4

411

IN2    4CS6CS4

OUT0

IN2*4CS6CS4

OUT1

(IN1*4CS7 + IN3*4CS5CS2) + CS4(IN1*4CS7 - IN3*4CS5CS2)

IN1    4CS7

OUT3

IN3    4CS5CS2

CS4

OUT2

:*(-1)

CSm = Cos(mπ/16)

a ———————— a+b
b ———————— b

a ———————— a
b ———————— a+b

FIG. 4a

30

FIG. 4b

START

GENERATE SUM OF SUM
AND DIFFERENCE COEFFICIENTS
TO GET COEFFICIENTS OF EVENFIELD

505

APPLY ONE DIMENSIONAL (HORIZONTAL)
4-POINT IW/IDCT TO LOWER HALF
OF COEFFICIENTS

510

APPLY 1 DIMENSIONAL 4-POINT IW/IDCT
(VERTICAL) TO RESULTING COEFFICIENTS
FOR LOWER HALF (VERTICALLY)

515

END

## FIG. 5

FIG. 6

FIG. 7

2    CS4

2CS4

2(1-CS4)

4CS2    2CS6CS4

8CS2CS4CS6

4CS2(1-2CS6CS4)

2CS4    2CS2CS4

2CS2

2CS4(1-2CS2CS4)

:*(-1)

CSm = Cos(mπ/16)

a ——————— a+b

b ——————— b

a ——————— a

b ——————— a+b

FIG. 8

905

$$P(x,y) = \frac{1}{4}\sum_{v=0}^{3}\left\{\frac{C'(v)}{w(v)}\cos\frac{\pi v(4y+1)}{16}\left[\sum_{h=0}^{3}\left(\frac{C'(h)}{w(h)}\cos\left(\frac{\pi h(2x+1)}{8}\right)Q''(h,v)\right)\right]\right\}$$

906

907

910

$$P(x,y) = \frac{1}{4}\sum_{h=0}^{3}\left\{\frac{C'(h)}{w(h)}\cos\left(\frac{\pi h(2x+1)}{8}\right)\left[\sum_{v=0}^{3}\left(\frac{C'(v)}{w(v)}\cos\left(\frac{\pi v(4y+1)}{16}\right)Q''(h,v)\right)\right]\right\}$$

911

912

915

where    $x = 0,1,2,3$
$y = 0,1,2,3$

$$C'(h) = \begin{cases} 1, & h = 0 \\ \sqrt{2}, & h = 1,2,3 \end{cases}$$

$$Q''(h,v) = \begin{cases} 2Q(h,v), & h = 0, v = 0 \\ Q(h,v), & others \end{cases}$$

$w(0) = 1$
$w(1) = CS4/(4 * CS7 * CS2)$
$w(2) = CS4/(2 * CS6)$
$w(3) = 1/(2 * CS5)$
$CSm = \cos(m\pi/16)$

# FIG. 9a

$$P(x,y) = \frac{1}{4}\sum_{v=0}^{3}\left\{\frac{C(v)}{w(2v)}\cos\frac{\pi v(2y+1)}{8}\left[\sum_{h=0}^{3}\left(\frac{C(h)}{w(h)}\cos\left(\frac{\pi h(2x+1)}{8}\right)\right)(Q''(h,v)+Q''(h,v+4))\right]\right\}$$

926

927

925

$$P(x,y) = \frac{1}{4}\sum_{h=0}^{3}\left\{\frac{C(h)}{w(h)}\cos\frac{\pi h(2x+1)}{8}\left[\sum_{v=0}^{3}\left(\frac{C(v)}{w(2v)}\cos\left(\frac{\pi v(2y+1)}{8}\right)\right)Q''(h,v)+Q''(h,v+4)\right]\right\}$$

921

922

920

where     $x = 0,1,2,3$
          $y = 0,1,2,3$

$$C(h) = \begin{cases} 1, & h = 0 \\ \sqrt{2}, & h = 1,2,3 \end{cases}$$

$$Q''(h,v) = \begin{cases} 2Q(h,v), & h = 0, v = 0 \\ Q(h,v), & others \end{cases}$$

930

$w(0) = 1$
$w(1) = CS4/(4 * CS7 * CS2)$
$w(2) = CS4/(2 * CS6)$
$w(3) = 1/(2 * CS5)$
$w(4) = 7/8$
$w(6) = CS4/CS2$
$CSm = \cos(m\pi/16)$

**FIG. 9b**

FIG. 10

FIG. 11

FIG. 12

START

APPLY 1-DIMENSIONAL 2 POINT
IW/IDCT TO FIRST 2 ROWS
(HORIZONTAL)

APPLY 1 DIMENSIONAL 2 POINT
IW/IDCT TO LOWER 2 SUM
COEFFICIENTS FOR FIRST
2 COLUMNS (VERTICAL)

END

FIG. 13

FIG. 14

FIG. 15

$$P(x,y) = \frac{1}{4}\sum_{v=0}^{1}\left\{\frac{C(v)}{w(v)}\cos\frac{\pi v(2y+1)}{4}\left[\sum_{h=0}^{1}\left(\frac{C(h)}{w(h)}\cos\left(\frac{\pi h(2x+1)}{4}\right)Q''(h,v)\right)\right]\right\}$$

1606

1607

1605

$$P(x,y) = \frac{1}{4}\sum_{h=0}^{1}\left\{\frac{C(h)}{w(h)}\cos\frac{\pi h(2x+1)}{4}\left[\sum_{v=0}^{1}\left(\frac{C(v)}{w(v)}\cos\left(\frac{\pi v(2y+1)}{4}\right)Q''(h,v)\right)\right]\right\}$$

1611

1612

1610

where $\quad x = 0, 1$
$\quad\quad\quad y = 0, 1$

$$C(h) = \begin{cases} 1, & h = 0 \\ \sqrt{2}, & h = 1 \end{cases}$$

$$Q''(h,v) = \begin{cases} 2Q(h,v), & h = 0, v = 0 \\ Q(h,v), & others \end{cases}$$

$w(0) = 1$
$w(1) = CS4/(4 * CS7 * CS2)$
$CSm = \cos(m\pi/16)$

1615

# FIG. I6a

$$P(x,y) = \frac{1}{4} \sum_{v=0}^{1} \left\{ \frac{C'(v)}{w(2v)} \cos \frac{\pi v(2y+1)}{4} \left[ \sum_{h=0}^{1} \left( \frac{C'(h)}{w(h)} \cos\left( \frac{\pi h(2x+1)}{4} \right) Q''(h,v) \right) \right] \right\}$$

1626

1627

1625

$$P(x,y) = \frac{1}{4} \sum_{h=0}^{1} \left\{ \frac{C'(h)}{w(h)} \cos \frac{\pi v(2x+1)}{4} \left[ \sum_{v=0}^{1} \left( \frac{C'(v)}{w(2v)} \cos\left( \frac{\pi v(2y+1)}{4} \right) Q''(h,v) \right) \right] \right\}$$

1631

1632

1630

where     x = 0, 1
          y = 0, 1

$$C'(h) = \begin{cases} 1, & h = 0 \\ \sqrt{2}, & h = 1 \end{cases}$$

$$Q''(h,v) = \begin{cases} 2Q(h,v), & h = 0, v = 0 \\ Q(h,v), & \text{others} \end{cases}$$

w(0) = 1
w(1) = CS4/(4 * CS7 * CS2)
w(2) = CS4/(2 * CS6)
CSm = cos(mπ/16)

1635

**FIG. 16b**

## EUROPEAN SEARCH REPORT

**Application Number**

EP 10 16 7779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 262 854 A (NG SHEAU-BAO) 16 November 1993 (1993-11-16) * column 7, line 3 - line 54 * * column 8, line 40 - line 45 * * claim 1 * * figures 8,8A,8B,8C * | 1-36 | INV. G06T3/40 H04N7/26 |
| X | EP 0 707 426 A (HITACHI LTD) 17 April 1996 (1996-04-17) * column 20, line 1 - line 23 * * column 21, line 23 - column 22, line 2 * * column 22, line 17 - line 25 * * figures 3A-3E,4 * | 7-16, 18-22,24 | |
| A | | 1-6,17, 23,25-36 | |
| X | BHASKARAN V: "Mediaprocessing in the Compressed Domain", DIGEST OF PAPERS OF COMPCON (COMPUTER SOCIETY CONFERENCE) 1996, TECHNOLOGIES FOR THE INFORMATION SUPERHIGHWAY, 25 February 1996 (1996-02-25), - 28 February 1996 (1996-02-28), pages 204-209, XP010160896, IEEE, Los Alamitos, US ISBN: 0-8186-7414-8 | 7-16, 18-22,24 | |
| A | * page 204, right-hand column, line 33 - page 205, left-hand column, line 1 * * Section 2.2 Spatial Domain Downscaling * * figures 1,3 * | 1-6,17, 23,25-36 | TECHNICAL FIELDS SEARCHED (IPC) G06T H04N |

-/--

The present search report has been drawn up for all claims

| Place of search | Date of completion of the search | Examiner |
|---|---|---|
| Berlin | 23 December 2010 | Sampels, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

**Application Number**

EP 10 16 7779

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | MERHAV, N: "Direct Conversions Between DV Format DCT and Oridnary DCT", HEWLETT PACKARD TECHNICAL REPORTS, [Online] vol. 98-140, August 1998 (1998-08), XP002255003, Haifa, Israel Retrieved from the Internet: URL:http://www.hpl.hp.com/techreports/98/HPL-98-140.pdf> [retrieved on 2003-09-04] * the whole document * | 1-6,17, 23,25-36 | |
| A | MERHAV N ET AL: "Fast Algorithms for DCT-Domain Image Down-Sampling and for Inverse Motion Compensation", IEEE TRANSACTIONS ON CIRCUITS AND SYSTEMS FOR VIDEO TECHNOLOGY, vol. 7, no. 3, 1 June 1997 (1997-06-01), pages 468-476, XP000690585, IEEE, New York, US ISSN: 1051-8215 * the whole document * | 1-36 | |
| A | SHIH-FU C ET AL: "Manipulation and Compositing of MC-DCT Compressed Video", IEEE JOURNAL ON SELECTED AREAS IN COMMUNICATIONS, vol. 13, no. 1, 1995, pages 1-11, XP000492740, IEEE, New York, US ISSN: 0733-8716 * page 5, left-hand column, line 5 - line 15 * * table 1 * | 1-36 | TECHNICAL FIELDS SEARCHED (IPC) |

-/--

The present search report has been drawn up for all claims

| Place of search | Date of completion of the search | Examiner |
|---|---|---|
| Berlin | 23 December 2010 | Sampels, Michael |

EPO FORM 1503 03.82 (P04C01)

Europäisches
Patentamt

European
Patent Office

Office européen
des brevets

# EUROPEAN SEARCH REPORT

**Application Number**

EP 10 16 7779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MERHAV N ET AL: "A TRANSFORM DOMAIN APPROACH TO SPATIAL DOMAIN IMAGE SCALING", PROCEEDINGS OF THE 1996 IEEE INTERNATIONAL CONFERENCE ON ACOUSTICS, SPEECH, AND SIGNAL PROCESSING (ICASSP 1996), 7 May 1996 (1996-05-07), - 10 May 1996 (1996-05-10), pages 2403-2406, XP000669702, IEEE, New York, US ISBN: 0-7803-3193-1 * page 2403, right-hand column, line 18 - page 2404, left-hand column, line 26 * * page 2405, left-hand column, line 3 - right-hand column, line 14 * | 1-36 | |

-----

|  |  |  | **TECHNICAL FIELDS SEARCHED (IPC)** |

The present search report has been drawn up for all claims

| Place of search | Date of completion of the search | Examiner |
|---|---|---|
| Berlin | 23 December 2010 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 7779

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2010

| Patent document cited in search report | | Publication date | Patent family member(s) | | Publication date |
|---|---|---|---|---|---|
| US 5262854 | A | 16-11-1993 | AU | 3434293 A | 13-09-1993 |
| | | | BR | 9305941 A | 21-10-1997 |
| | | | CA | 2130479 A1 | 02-09-1993 |
| | | | CN | 1076824 A | 29-09-1993 |
| | | | CZ | 9401954 A3 | 15-02-1995 |
| | | | DE | 69324134 D1 | 29-04-1999 |
| | | | DE | 69324134 T2 | 28-10-1999 |
| | | | DK | 627153 T3 | 17-04-2000 |
| | | | EP | 0627153 A1 | 07-12-1994 |
| | | | ES | 2130252 T3 | 01-07-1999 |
| | | | HU | 70722 A2 | 30-10-1995 |
| | | | JP | 3793225 B2 | 05-07-2006 |
| | | | JP | 7504074 T | 27-04-1995 |
| | | | KR | 100266238 B1 | 15-09-2000 |
| | | | PL | 170173 B1 | 31-10-1996 |
| | | | RU | 2106759 C1 | 10-03-1998 |
| | | | SG | 64306 A1 | 27-04-1999 |
| | | | SK | 98194 A3 | 05-01-1995 |
| | | | TR | 26490 A | 15-03-1995 |
| | | | WO | 9317523 A1 | 02-09-1993 |
| EP 0707426 | A | 17-04-1996 | DE | 69529323 D1 | 13-02-2003 |
| | | | DE | 69529323 T2 | 20-11-2003 |
| | | | JP | 3591083 B2 | 17-11-2004 |
| | | | JP | 8205161 A | 09-08-1996 |
| | | | JP | 2004201342 A | 15-07-2004 |
| | | | US | 5614952 A | 25-03-1997 |
| | | | US | 5635985 A | 03-06-1997 |
| | | | US | 5646686 A | 08-07-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Specifications of Consumer-Used Digital VCRs Using 6.3 mm Magnetic Tape. *HD Digital VCR Conference,* December 1994

- Specifications of Consumer-Used Digital VCRs Using 6.3 mm Magnetic Tape. *HD Digital VCR Conference,* December 1994, 28